(19) Europäisches Patentamt
European Patent Office
Office européen des brevets

(11) Publication number: **0 145 263 B1**

(12) # EUROPEAN PATENT SPECIFICATION

(45) Date of publication of patent specification: **17.04.91**

(51) Int. Cl.$^5$: **C08F 4/72**, C08F 8/00, C08F 4/42, C09D 133/06

(21) Application number: **84307669.6**

(22) Date of filing: **07.11.84**

(54) **Living polymers and process for their preparation.**

(30) Priority: **07.11.83 US 549409**
**18.10.84 US 660588**
**07.11.83 US 549408**
**18.10.84 US 660589**

(43) Date of publication of application:
**19.06.85 Bulletin 85/25**

(45) Publication of the grant of the patent:
**17.04.91 Bulletin 91/16**

(84) Designated Contracting States:
**AT BE DE FR GB IT NL SE**

(56) References cited:
**EP-A- 0 068 887**

(73) Proprietor: **E.I. DU PONT DE NEMOURS AND COMPANY**
**1007 Market Street**
**Wilmington Delaware 19898(US)**

(72) Inventor: **Webster, Owen Wright**
**2106 Navaro Road**
**Wilmington Delaware 19803(US)**
Inventor: **Farnham, William Brown**
**2519 W. 18th Street**
**Wilmington Delaware 19806(US)**
Inventor: **Sogah, Dotsevi Yao**
**2518 Channin Drive Channin**
**Wilmington Delaware 19810(US)**

(74) Representative: **Jones, Alan John et al**
**CARPMAELS & RANSFORD 43 Bloomsbury Square**
**London, WC1A 2RA(GB)**

**EP 0 145 263 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

### Technical Field

This invention relates to a process for polymerizing polar α-olefinic monomers to "living" polymers and to the "living" polymers produced by such a process.

### Background

European Patent Application No. 82303405.3 (Publication No. 0 068 887) discloses processes for polymerizing the polar α-olefinic monomer selected from the group consisting of

$$CH_2=C(Y)X \quad ,$$

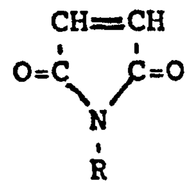

and mixtures thereof
wherein:
X is -CN, -CH=CHC(O)X' or -C(O)X';
Y is -H, $-CH_3$, -CN or $-CO_2R$, provided, however, when X is -CH=CHC(O)X', Y is -H or $-CH_3$;
X' is $-OSi(R^1)_3$, -R, -OR or -NR'R"; each $R^1$ is independently selected from $C_{1-10}$ alkyl and $C_{6-10}$ aryl or alkaryl;
R is $C_{1-20}$ alkyl, alkenyl, or alkadienyl or $C_{6-20}$ cycloalkyl, aryl, alkaryl or aralkyl, any of said groups optionally containing one or more ether oxygen atoms within aliphatic segments thereof and optionally containing one or more functional substituents that are unreactive under polymerizing conditions; and each of R' and R" is independently selected from $C_{1-4}$ alkyl
by contacting the one or more monomers under polymerizing conditions with:

(i) the initiator of the formula $(R^1)_3MZ$
wherein:
$R^1$ is as defined above;
Z is an activating substituent selected from the group consisting of

-CN, 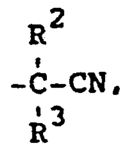 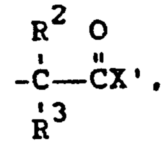

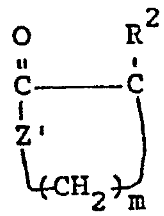 , 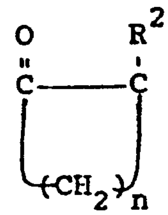 ,

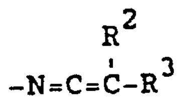 , 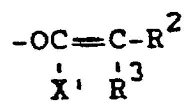 , 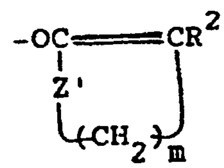 ,

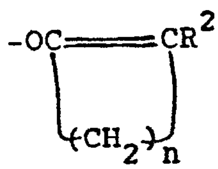

and mixtures thereof
wherein:
X' is as defined above for the monomer; each of $R^2$ and $R^3$ is independently selected from H; $C_{1-10}$ alkyl and alkenyl; $C_{6-10}$ aryl, alkaryl, and aralkyl; any of said groups except H optionally containing one or more ether oxygen atoms within aliphatic segments thereof and optionally containing one or more functional substituents that are unreactive under polymerizing conditions;
Z' is O or N;
m is 2, 3 or 4;
n is 3, 4 or 5; and
M is Si, Sn, or Ge,
provided, however, when Z is

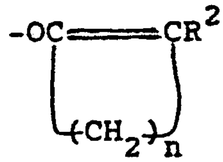 or 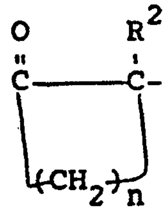

M is Sn or Ge; and
(ii) a co-catalyst which is a source of fluoride, cyanide or azide ions or a suitable Lewis acid, for example, zinc chloride, bromide or iodide, boron trifluoride, alkylaluminum oxide or an alkylaluminum chloride, or a source of bifluoride ions $HF_2^-$, to produce "living" polymer having repeat units of the one or more monomers.

By "living" polymer is meant a polymer of the invention which contains an active terminal group and is

capable of polymerizing further in the presence of monomer(s) and co-catalyst.

The polymers produced by the process of the above Application are "living" polymers of the formula

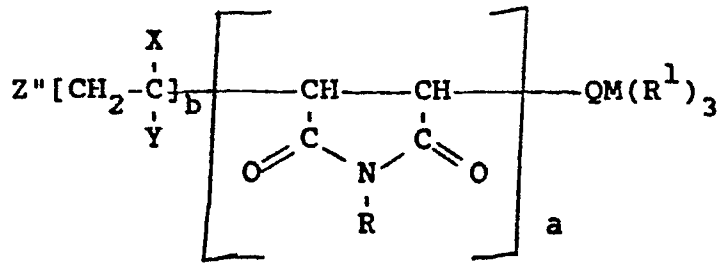

wherein:

Z" is selected from the group consisting of

-CN, 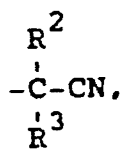 , 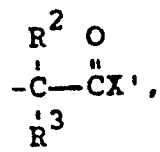 , 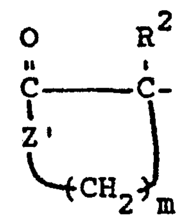 and 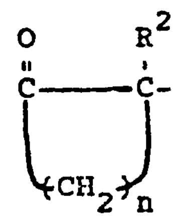 ;

each of a and b is independently selected from 0 or a number in the range 1 to about 100,000, provided, however, (a + b) is at least 3;

Q is the divalent radical selected from the group consisting of

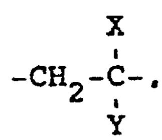 , 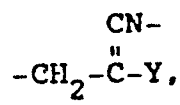 , 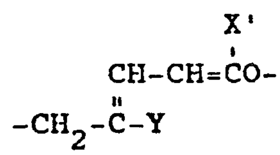 , 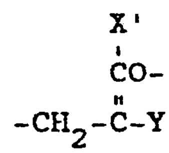 ,

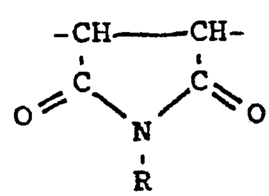 , 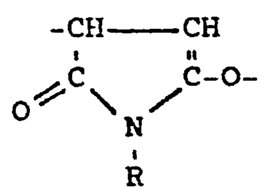

and mixtures thereof; and all remaining symbols are as defined above.

## Disclosure of the Invention

The present invention provides an improvement in the aforesaid processes and polymers. More specifically, the present invention resides in the unexpected discovery of additional chemical compounds which can be used in the aforesaid processes. Use of these additional chemical compounds provides polymers which are not preparable by means of the aforesaid processes. The invention herein resides in the process comprising polymerizing the monomer selected from the group consisting of

$CH_2=C(Y)X$ , 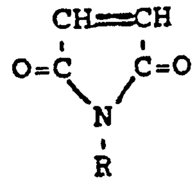

and mixtures thereof
wherein:
X is -CN, -CH = CHC(O)X' or -C(O)X';
Y is -H, $-CH_3$, -CN or $-CO_2R$, provided, however, when X is -CH = CHC(O)X', Y is -H or $-CH_3$;
X' is $-OSi(R^1)_3$, -R, -OR or -NR'R"; each $R^1$, independently, is a hydrocarbyl radical which is an aliphatic, alicyclic, aromatic or mixed aliphatic-aromatic radical containing up to 20 carbon atoms;
R is a hydrocarbyl radical which is an aliphatic, alicyclic, aromatic or mixed aliphatic-aromatic radical containing up to 20 carbon atoms, optionally containing one or more ether oxygen atoms within aliphatic segments thereof and optionally containing one or more functional substituents that are unreactive under polymerizing conditions; and
each of R' and R" is independently selected from $C_{1-4}$ alkyl

by contacting the one or more monomers under polymerizing conditions with:
(i) the initiator of the formula $(R^1)_3MZ$ wherein:
$R^1$ is as defined above;
Z is an activating substituent selected from the group consisting of

-CN, 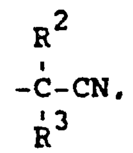 , 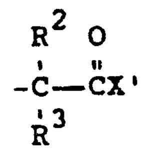 ,

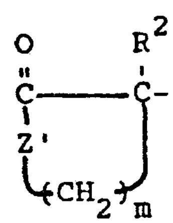 , 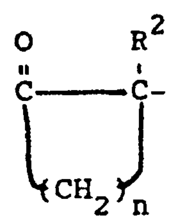 ,

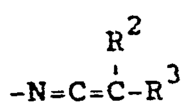 , 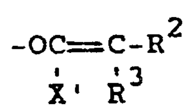 , 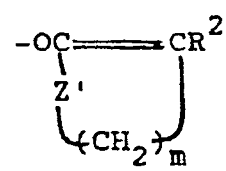 ,

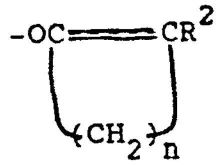

and mixtures thereof X' is as defined above for the monomer; each of $R^2$ and $R^3$ is independently selected from H and hydrocarbyl, defined as for R above;
Z' is 0 or NR' wherein R' is as defined above;

m is 2, 3 or 4;
n is 3, 4 or 5; and
M is Si, Sn, or Ge,
provided, however, when Z is

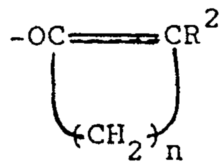

or

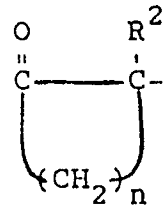

M is Sn or Ge; and
(ii) a co-catalyst which is a source of fluoride, cyanide or azide ions, a suitable Lewis acid, for example, zinc chloride, bromide or iodide, boron trifluoride, an alkylaluminum oxide or an alkylaluminum chloride, or a source of bifluoride ions $HF_2^{\ominus}$,
to produce "living" polymer having repeat units of the one or more monomers,
said process further characterized in that:

(a) $R^1$ is H, provided that at least one $R^1$ group is not H; and/or

(b) the initiator is of the formula $(R^1)_2M(Z^1)_2$ or $O[M(R^1)_2Z1]_2$ wherein $R^1$ and M are as defined above and $Z^1$ is an activating substituent and is

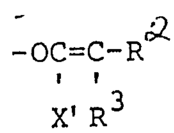

wherein X', $R^2$ and $R^3$ are as defined above; and/or

(c) Z is selected from the group consisting of -SR, $-OP(NR'R'')_2$, $-OP(OR^1)_2$, $-OP[Osi(R^1)_3]_2$ and mixtures thereof, wherein R, $R^1$, R' and R" are as defined above; and/or

(d) $R^2$ and $R^3$ taken together are

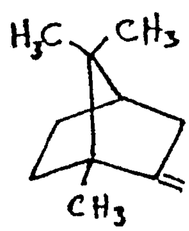

provided, however, Z is

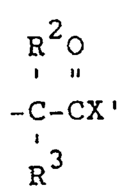

or

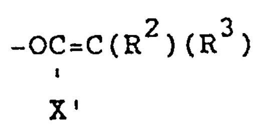

and/or $Z^2$ is

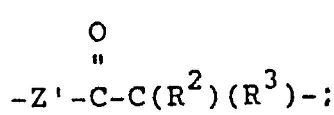

and/or

(e) either X' and $R^2$ or X' and $R^3$ taken together are

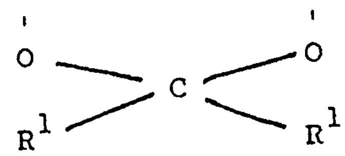

provided, however, Z is

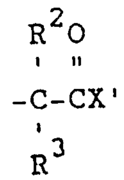 or 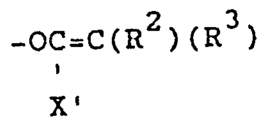

and/or $Z^2$ is

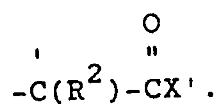

By "living" polymer is meant a polymer of the invention which contains at least one active terminal group and is capable of polymerizing further in the presence of monomer(s) and co-catalyst.

It will be understood by one skilled in the art that the last four members of the aforesaid group from which the activating substituent Z is selected are the respective ketene imine or enol forms of the previous four members of the group. The mixtures of such members which are operable herein include, but are not limited to, the corresponding cyano-imine or keto-enol mixtures.

The polymers produced by the process of the invention are "living" polymers of the formula

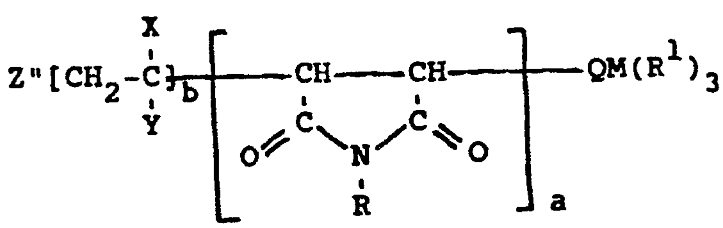

wherein:

Z" is selected from the group consisting of

-CN, 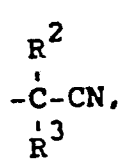, 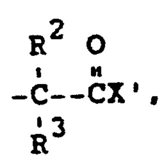, 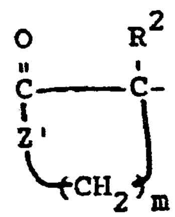 and 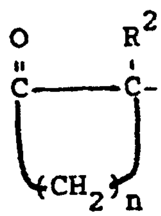 ;

each of a and b is independently selected from 0 or a number in the range 1 to about 100,000, provided, however, (a + b) is at least 3;

Q is the divalent radical selected from the group consisting of

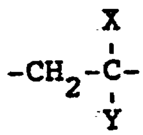, 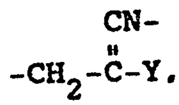, 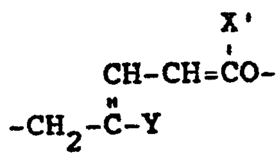, 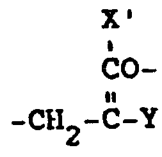,

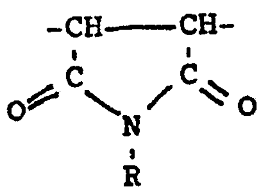, 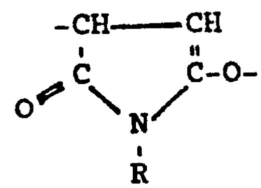

and mixtures thereof; and

all remaining symbols are as defined above, said polymer further characterized in that:

(a) $R^1$ is H, provided that at least one $R^1$ group is not H; and/or

(b) Z" is selected from $-P(O)(NR'R")_2$, $-P(O)(OR^1)_2$, $-P(O)[OSi(R^1)_3]_2$ and -SR: and/or

(c) the "living" polymer is of the formula

(I) $R_p([Z^3\overline{P}\ QM(R^1)_2]_2(O))_p$; (II) $(R^1)_2M(Q\overline{P}\ Z")_2$; or (III) $O[M(R^1)_2Q\overline{P}\ Z"]_2$;

wherein:

$R_p$ is a hydrocarbyl radical which is aliphatic, alicyclic, aromatic or mixed aliphatic-aromatic containing up to 20 carbon atoms, or a polymeric radical containing at least 20 carbon atoms, of valence p, optionally containing one or more ether oxygen atoms, keto groups and/or functional substituents that are unreactive under polymerizing conditions:

$Z^3$ is a diradical selected from the group consisting of

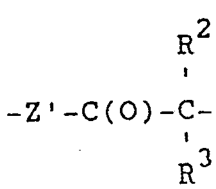, 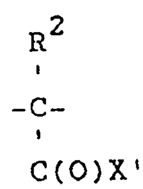, 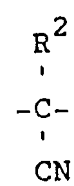, 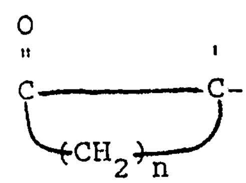,

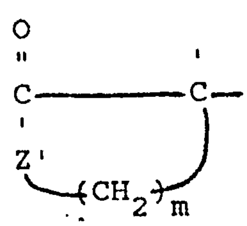

and mixtures thereof;

Z', $R^2$, $R^3$, X', m and n are as defined above;

$\overline{P}$ is a divalent polymeric radical of the formula

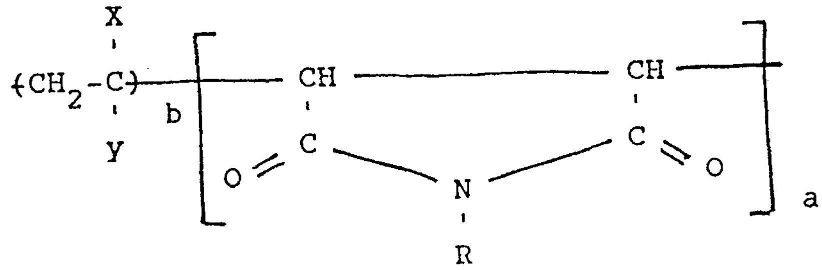

wherein X, Y, R, a and b are as defined above;
Q, M and $R^1$ are as defined above;
and
p is an integer and is at least 1,
provided, however,
(i) when $Z^3$ is

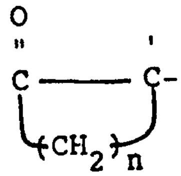 ,

M is Sn or Ge;
(ii) when $Z^3$ is

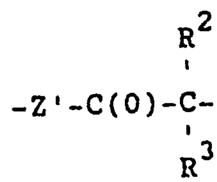

$R^2$ and $R^3$ taken together are

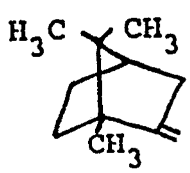 ;

(iii) when $Z^3$ is

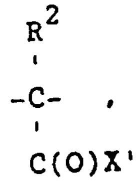 ,

$R^2$ and X' taken together are

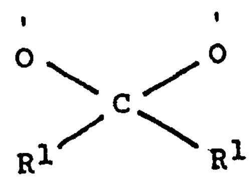

;

and

(iv) in Formulae (II) and (III), Z" is

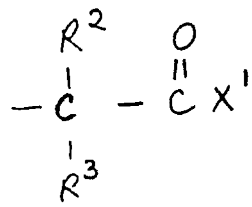

According to the present invention, one embodiment of the process comprises polymerizing the monomer selected from the group consisting of

$CH_2=C(Y)X$ ,

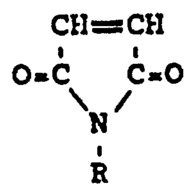

and mixtures thereof

wherein:

X is -CN, -CH=CHC(O)X' or -C(O)X':

Y is -H, $-CH_3$, -CN or $-CO_2R$, provided, however, when X is -CH-CHC(O)X', Y is -H or $-CH_3$;

X' is $-OSi(R^1)_3$, -R, -OR or -NR'R";

each $R^1$, independently, is H or a hydrocarbyl radical which is an aliphatic, alicyclic, aromatic or mixed aliphatic-aromatic radical containing up to 20 carbon atoms provided that at least one $R^1$ group is not H;

R is a hydrocarbyl radical which is an aliphatic, alicyclic, aromatic or mixed aliphatic-aromatic radical containing up to 20 carbon atoms, or a polymeric radical containing at least 20 carbon atoms, any of said radicals optionally containing one or more ether oxygen atoms within aliphatic segments thereof and optionally containing one or more functional substituents that are unreactive under polymerizing conditions, at least one of any R group in the monomer optionally containing one or more reactive substitutents of the formula $-Z'(O)C-C(Y^1)=CH_2$ wherein $Y^1$ is H or $CH_3$ and Z' is O or NR'; and

each of R' and R" is independently selected from $C_{1-4}$ alkyl

by contacting the one or more monomers under polymerizing conditions with:

(i) the initiator of the formula $(R^1)_3MZ$ wherein:

$R^1$ is as defined above;

Z is an activating substituent selected from the group consisting of -SR, $-OP(NR'R")_2$, $-OP(OR^1)_2$, $-OP[OSi(R^1)_3]_2$ and mixtures thereof, wherein R, $R^1$, R' and R" are as defined above; and

M is Si, Sn, or Ge, or

the initiator of the formula $(R^1)_2M(Z^1)_2$ or $O[M(R^1)_2Z^1]_2$ wherein;

$R^1$ and M are as defined above; and

$Z^1$ is an activating substituent and is

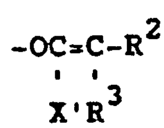

wherein:

X' is as defined above; and each of $R^2$ and $R^3$ is independently selected from H and hydrocarbyl, defined as for R above, or

the initiator of the formula $(R^1)_3MZ^4$ wherein:

$R^1$ and M are as defined above; and

$Z^4$ is an activating substituent selected from the group consisting of

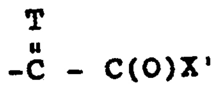 , $-OC(X')=C=T$,

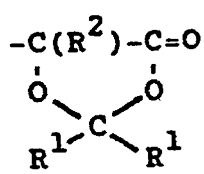 , 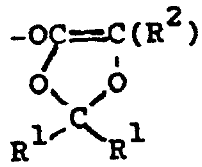

and mixtures thereof wherein:

$R^1$, $R^2$ and X' are as defined above and T is

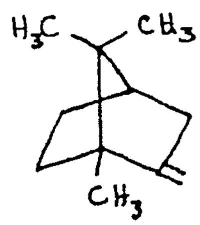

or the initiator of the formula $(R^1)_3MZ^5$ wherein:

$R^1$ and M are as defined above, provided,

however, at least one but no more than two $R^1$ groups of $(R^1)_3MZ^5$ is H; and

$Z^5$ is an activating substituent selected from the group consisting of

-CN, 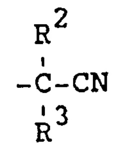, 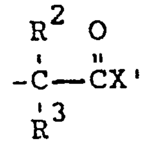,

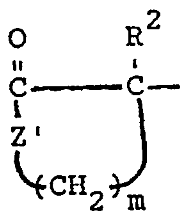, 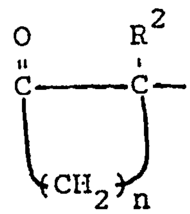,

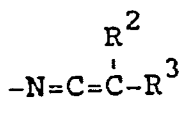, 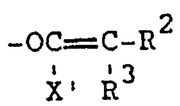, 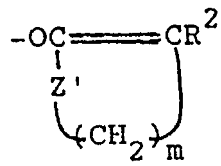,

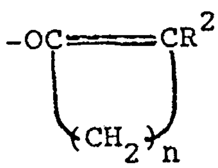

and mixtures thereof wherein:

$R^2$, $R^3$, X' and Z' are as defined above;

m is 2, 3 or 4; and

n is 3, 4 or 5,

at least one of any R, $R^2$ and $R^3$ in any initiator optionally containing one or more initiating substitutents of the formula $-Z^2-M(R^1)_3$ wherein:

M and $R^1$ are as defined above; and

$Z^2$ is an activating diradical selected from the group consisting of

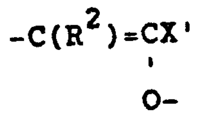 , 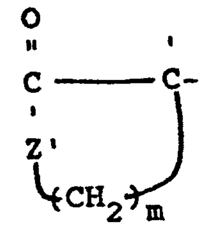 , 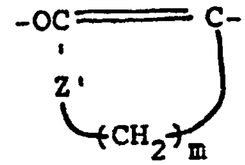 ,

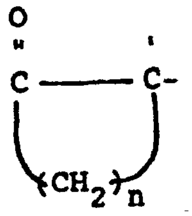 , 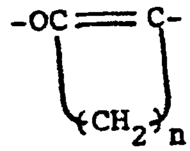 , 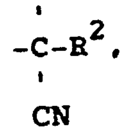 ,

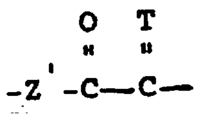 , 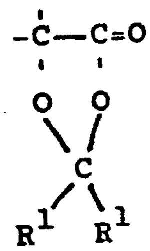

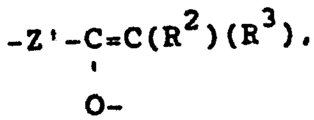 , 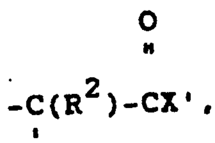 , 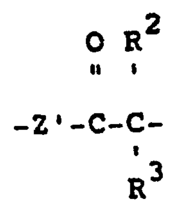 ,

and mixtures thereof wherein:
$R^1$, $R^2$, $R^3$, T, X'. Z', m and n are as defined above,
provided, however, when $Z^2$ is

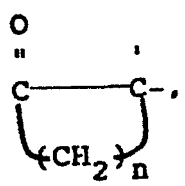 ,

M is Sn or Ge and, when $Z^2$ is any of the first nine groups listed above, at least one but not more than two $R^1$ groups of $Z^2$ is H; and

(ii) a co-catalyst which is a source of fluoride, cyanide or azide ions, a suitable Lewis acid, for example, zinc chloride, bromide or iodide, boron trifluoride, an alkylaluminum oxide or an alkylaluminum chloride, or a source of bifluoride ions $HF_2^{\ominus}$ , to produce "living" polymer having repeat units of the one or more monomers,

The polymers produced by the process of the invention include "living" polymers of the formula

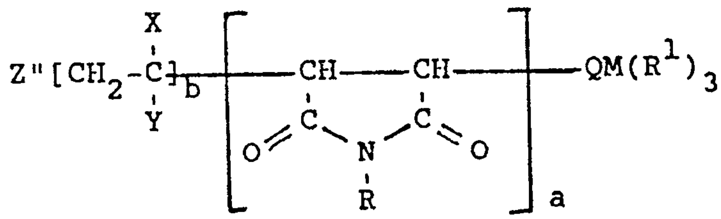

wherein:
Z" is selected from the group consisting of

-CN, 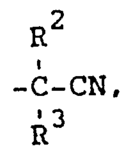, 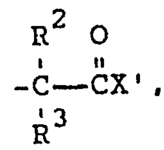,

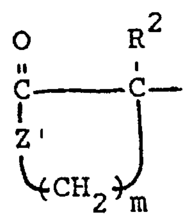, 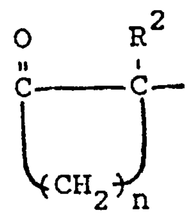,

$-P(O)(NR'R'')_2$, $-P(O)(OR^1)_2$, $-P(O)[OSi(R^1)_3]_2$ and -SR;
each of a and b is independently selected from 0 or a number in the range 1 to about 100,000, provided, however, (a + b) is at least 3;
Q is the divalent radical selected from the group consisting of

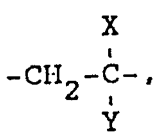, 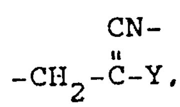, 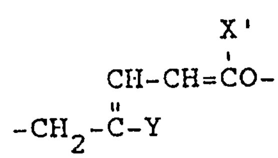, 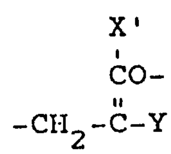,

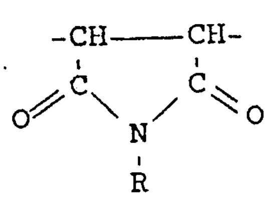, 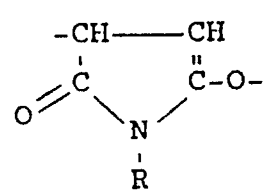

and mixtures thereof; and
all remaining symbols are as defined above, or the "living" polymer is of the formula

(I) $R_p([Z^3\overline{P}\ QM(R^1)_2]_2(O))_p$; (II) $(R^1)_2M(Q\overline{P}\ Z'')_2$; or (III) $O[M(R^1)_2Q\overline{P}\ Z'']_2$;

wherein:
$R_p$ is a hydrocarbyl radical which is aliphatic, alicyclic, aromatic or mixed aliphatic-aromatic containing up to 20 carbon atoms, or a polymeric radical containing at least 20 carbon atoms, of valence p, optionally containing one or more ether oxygen atoms, keto groups and/or functional substituents that are unreactive under polymerizing conditions;

$Z^3$ is a diradical selected from the group consisting of

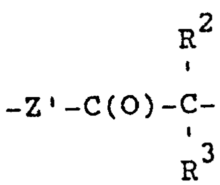 , 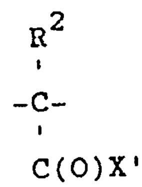 , 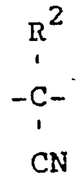 , 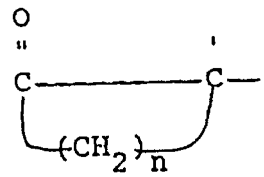 ,

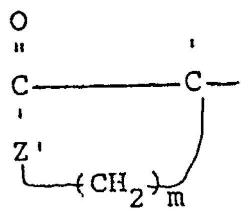

and mixtures thereof;
Z', $R^2$, $R^3$, X', m and n are as defined above;
$\overline{P}$ is a divalent polymeric radical of the formula

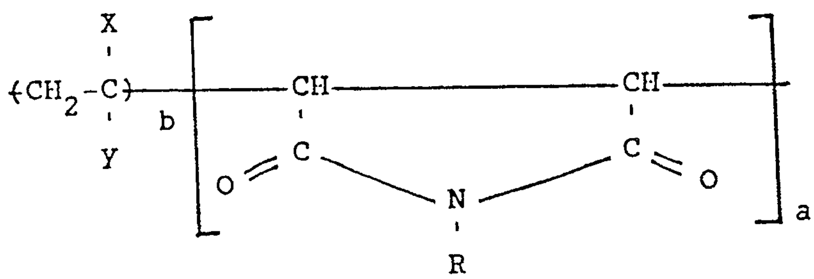

wherein X, Y, R, a and b are as defined above;
Q, M and $R^1$ are as defined above;
and
p is an integer and is at least 1,
provided, however,
(i) when $Z^3$ is

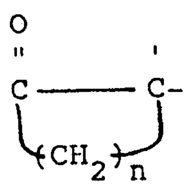 ,

M is Sn or Ge;
(ii) when $Z^3$ is

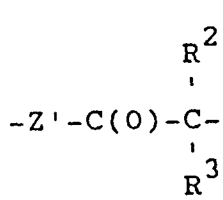 ,

$R^2$ and $R^3$ taken together is

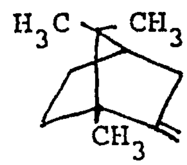 ;

(iii) when $Z^3$ is

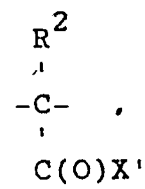

$R^2$ and X' taken together is

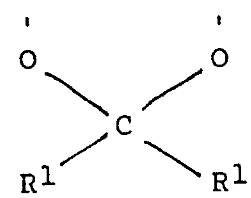 ;

and

(iv) when Z" is any of the first five groups listed above, at least one but not more than two $R^1$ groups is H.

It is readily apparent, that the five members of the group defining Z" are the same as the first five members of the aforesaid group defining Z and are cyano or keto forms of Z. Similarly, the third member of the group defining Z" is also the keto form of the aforesaid activating substituent $Z^1$. Moreover, the five members of the group defining $Z^3$ are the same as the keto and cyano members of the aforesaid group defining the activating diradical $Z^2$. It also is apparent that Q is a "living" polymer unit provided by the starting monomers of the process of the invention, as originally depicted above, or such unit in its enol or imine form. The "living" polymers contain terminal groups $-M(R^1)_3$ at their "living" ends or, when polymerization is initiated by bifunctional initiators of the formula $(R^1)_2M(Z^1)_2$ or $O(M(R^1)_2Z^1]_2$, central groups $-M(R^1)_2-$ or $-M(R^1)_2-O-M(R)_2-$. These terminal or central groups are attached to carbon if the adjacent Q unit is in its keto form, and to a hetero atom (O or N) if the adjacent Q unit is in its enol form. Both tautomeric forms may coexist in a given "living" polymer of the invention.

In the description of the further characterization of the invention, any reference to symbols "as defined above" means not only as defined above in the further characterization but also as defined anywhere hereinabove. This caveat applies particularly to the definitions of R, $R^1$, $R^2$, $R^3$, Z and Z".

The "living" polymer of the invention can be a homopolymer or a copolymer, depending on the monomer or monomers selected for use in the process of the invention. Moreover, as will be discussed more fully hereinafter, the "living" polymer can be linear or branched and, depending on the selection of X, $R_p$ or Z" in the formulas, can be used to prepare crosslinked polymers and block copolymers.

Monomers which are suitable for use in the practice of this invention are, in general, known compounds and include, but are not limited to, the following: methyl methacrylate; butyl methacrylate;
sorbyl acrylate and methacrylate; lauryl methacrylate;
ethyl acrylate: butyl acrylate; acrylonitrile;
methacrylonitrile; 2-ethylhexyl methacrylate;
2-(dimethylamino)ethyl methacrylate;
2-(dimethylamino)ethyl acrylate; 3,3-dimethoxypropyl acrylate; 3-methacryloxypropyl acrylate;
2-acetoxyethyl methacrylate; p -tolyl methacrylate;
2,2,3,3,4,4,4-heptafluorobutyl acrylate; methylene malononitrile; ethyl 2-cyanoacrylate; N,N-dimethyl acrylamide; 4-fluorophenyl acrylate;

2-methacryloxyethyl acrylate and linoleate; propyl vinyl ketone: ethyl 2-chloroacrylate; glycidyl methacrylate; 3-methoxypropyl methacrylate;
2-[(1-propenyl)oxy]ethyl methacrylate and acrylate;
phenyl acrylate; 2-(trimethylsiloxy)ethyl methacrylate; 2-(methylsiloxy)ethyl methacrylate;
allyl acrylate and methacrylate; unsaturated esters of polyols, particularly such esters of
α-methylenecarboxylic acids, for example, ethylene glycol diacrylate, diethylene glycol diacrylate,
glycerol diacrylate, glyceryl triacrylate, mannitol hexaacrylate, sorbitol hexaacrylates, ethylene glycol dimethacrylate, hexamethylene diol diacrylate,
1,3-propanediol dimethacrylate, 1,2,4-butanetriol trimethacrylate, 1,1,1-trimethylolpropane triacrylate,
triethylene glycol diacrylate, 1,4-cyclohexanediol diacrylate. 1,4-benzenediol dimethacrylate,
pentaerythritol tetramethacrylate, dipentaerythritol hexaacrylate, pentaerythritol tetraacrylates, 1.3-propanediol diacrylate, 1.5-pentanediol dimethacrylate, the bis-acrylates and methacrylates of polyethylene glycols of molecular weight 200-4000, and α,ω-polycaprolactonediol diacrylate; unsaturated N-alkylated amides, such as methylene
bis-(N-methylacrylamide), methylene
bis-(N-methylmethacrylamide), ethylene
bis-(N-methylmethacrylamide), 1.6-hexamethylene bis-(N-methylacrylamide),
bis(γ-N-methylmethacrylamidopropoxy)ethane;
β-N-methylmethacrylamidoethyl methacrylate;
3,3,4,4,5,5,6,6,6-nonafluorohexyl acrylate;
2-(perfluorohexyl)ethyl methacrylate;
2-(perfluorooctyl)ethyl methacrylate; and mixtures thereof. Preferred monomers include methyl methacrylate; glycidyl methacrylate; sorbyl methacrylate; ethyl acrylate; butyl acrylate; sorbyl acrylate; 2-(trimethylsiloxy)ethyl methacrylate;
2-methacryloxyethyl acrylate; 2-acetoxyethyl methacrylate; 2-(dimethylamino)ethyl methacrylate;
N-phenyl-N-methylacrylamide; p-xylylene diacrylate;
1,4-bis(2-acryloxyethyl)benzene; pentaerythritol triacrylate: 1,1,1-trimethylolpropane triacrylate;
pentaerythritol tetraacrylate; triethylene glycol diacrylate; triethylene glycol dimethacrylate;
1,1,1-trimethylolpropane trimethacrylate;
4-acryloxydiphenylmethane; and hexamethylenediol diacrylate and dimethacrylate. Methyl methacrylate is most preferred.

As indicated above in the definition of R in the formulas for the monomer, substituents that are unreactive under polymerizing conditions include those having oxygen-, nitrogen-, or silicon-containing groups which are devoid of reactive hydrogen atoms. Groups such as $OSi(R^1)_3$ and $CONH_2$ are nonreactive under such conditions and, therefore, can be tolerated. On the other hand, groups such as $CO_2H$ and OH are reactive under polymerizing conditions. In order for monomers containing such groups on the R substituent to be useful in the invention process, the groups must be chemically protected, i.e. deactivated. Monomers containing such deactivated groups are useful in the preparation of polymers which, upon treatment to remove the protective group, have functional sites along the polymer chain. Monomers which contain sufficiently sterically hindered amine and alcohol groups that remain inert under reaction conditions may be used directly without deactivation. The functional sites can impart special properties to the polymer products, including curability and photosensitivity.

The definition of R in the monomer formulas also includes substituents which are reactive under polymerizing conditions and of the formula $CH_2=C(Y^2)C(O)Z'$- wherein $Y^2$ and Z' are as defined above. These reactive substituents provide additional centers for initiation of polymerization, leading to the growth of polymeric branches. The reactive substituents are derived from (meth)acrylates or (meth)acrylamides which are themselves operable monomers in the present invention. These substituents can react with initiators of the invention to provide new initiating sites from which polymeric branches can grow in the presence of monomer(s) and cocatalyst. Initiators which are useful in the invention process include, but are not limited to, the following:
[(1-methoxy-2-methyl-1-propenyl)oxy]trimethylsilane;
[(1-methoxy-2-methyl-1-propenyl)oxy]dimethyloctadecylsilane: [(1-methoxy-2-methyl-1-propenyl)oxy]-methylsilane; 2-(trimethylsilyl)isobutyronitrile; ethyl 2-(trimethylsilyl)acetate; methyl 2-methyl-2-(tributylstannyl)propanoate;
[(2-methyl-1-cyclohexenyl)oxy]tributylstannane;
trimethylsilyl nitrile; methyl 2-methyl-2-(trimethylgermanyl)propanoate;
[(4,5-dihydro-2-furanyl)oxy]trimethylsilane;
[(2-methyl-1-propenylidene)bis(oxy)]bis[trimethylsilane]; [(2-methyl-1-[2-(methoxymethoxy)ethoxy]-1-pro-

penyl)oxy]trimethylsilane; methyl [(2-methyl-1-(trimethylsilyloxy)-1-propenyl)oxy]acetate; [(1-(methoxymethoxy)-2-methyl-1-propenyl)oxy]trimethylsilane; trimethyl α,α',α"-tris(trimethylsilyl)-1,3,5-benzenetriacetate; dimethyl α,α'-bis(trimethylsilyl)-1,3-benzenediacetate;
[1,6-dimethoxy-1.5-hexadiene-1,6-diylbis(oxy)]bis[trimethylsilane]; [(2-ethyl-1-propoxy-1-butenyl)oxy]ethyldimethylsilane, ethyl 2-(trimethylstannyl)propanoate;
[(1-cyclohexenyl)oxy]trimethylstannane;
[(2-methyl-1-butenylidene)bis(oxy)]bis[trimethylsilane];
2-(trimethylsilyl)propanenitrile; ethyl (trimethylgermanyl)acetate: [(1-((1-dec-2-enyl)oxy)-2-methyl-1-propenyl)oxy]trimethylsilane; phenyl 2-methyl-2-(tributylstannyl)propanoate; methyl 2-(triethylsilyl)acetate; dimethyl 2,5-bis(trimethylgermanyl)hexanedioate;
[(2-methyl-1-cyclohexenyl)oxy]tributylstannane;
[(1-methoxy-2-methyl-1-propenyl)oxy]phenyldimethylsilane: [(2-methyl-1-[2-(trimethylsiloxy)ethoxy]-1-propenyl)oxy]trimethylsilane;
N,N-dimethyl-(trimethylsilyl)phosphorodiamidite;
(trimethylsilyl)dimethyl phosphite;
tris(trimethylsilyl) phosphite;
N,N-dimethyl-P-[3-methoxy-3-((trimethylsilyl)oxy)-2-propenyl]phosphonic diamide;
N,N-dimethyl-P-[3-methoxy-2-methyl-3-((trimethylsilyl)oxy)-2-propenyl]phosphonic diamide;
[3-methoxy-3-((trimethylsilyl)oxy)-2-propenyl]phosphonic acid, bis(trimethylsilyl) ester;
[3-methoxy-2-methyl-3-((trimethylsilyl)oxy)-2-propenyl]phosphonic acid, bis(trimethylsilyl) ester;
[3-methoxy-3-((trimethylsilyl)oxy)-2-propenyl]phosphonic acid, diethyl ester;
[(2-(1,1-dimethylethyl)-5-phenyl-1,3-dioxol-4-yl)oxy]trimethylsilane; [(2-methyl-5-phenyl-1,3-dioxol-4-yl)oxy]-trimethylsilane;
[(methoxy)(1,7,7-trimethylbicyclo[2.2.1]heptan-2-ylidene)methoxy]trimethylsilane;
1,3-bis[(1-methoxy-1-butenyl)oxy]-1,1,3,3-tetramethyl-disiloxane;
bis[(1-methoxy-2-methyl-1-propenyl)oxy]methylsilane;
bis[(1-methoxy-2-methyl-1-propenyl)oxy]dimethylsilane;
and, except when a bifluoride catalyst is used,
trimethyl(methylthio)silane; and
trimethyl(phenylthio)silane.
Preferred initiators include
[(1-methoxy-2-methyl-1-propenyl)oxy]trimethylsilane;
[(2-methyl-1-propenylidene)bis(oxy)bis[trimethylsilane]; trialkylsilyl nitriles; and
[(2-methyl-1-[2-(trimethylsiloxy)ethoxy]-1-propenyl)oxy]trimethylsilane. Trimethylsilyl nitrile is most preferred.

Examples of initiators which can initiate more than one polymer chain include trimethyl α,α'α"-tris-(trimethylsily)-1,3,5-benzenetriacetate, dimethyl α,α'-bis(trimethylsilyl)-1,3-benzenediacetate, 1,6-dimethoxy-1,5-hexadiene-1,6-diylbis(oxy)bis[trimethylsilane], and bis[(1-methoxy-2-methyl-1-propenyl)oxy]methylsilane.

The initiators used in the invention are either known compounds or can be prepared by known methods from known starting materials. Of the initiators listed above, trimethylsilyl nitrile and ethyl trimethylsilyl acetate are commercially available. Initiators of the aforesaid formula $(R^1)_3MZ$ wherein Z is

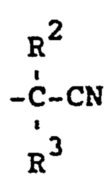 ,
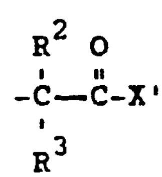 ,

or the corresponding ketene imine or enol isomeric forms

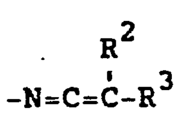
or
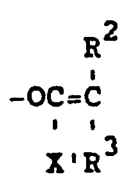

wherein X' is defined as above can be prepared from nitriles $(R^2)(R^3)$ CHCN, esters, ketones, or substituted amides $(R^2)(R^3)CHC(O)X'$ wherein X' is as defined above by reaction with, for example, n -butyllithium or lithium diisopropylamide, followed by reaction with a halide of the formula $(R^1)_3MCl$ wherein $R^1$ and M are as defined above.

Initiators of the aforesaid formula wherein $R^2$ or $R^3$ is $CH_3$ also can be prepared from the monomers using appropriate procedures. For example, $CH_2 = C(R^3)C(O)X'$ can be reacted with $(R^1)_3MH$ wherein $R^1$ is as defined above to produce $(R^1)_3MZ$ wherein Z is

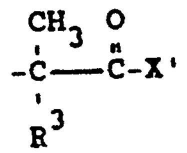

.

In still another method, the preferred initiators which are trialkylsilyl nitriles can be prepared in situ by treating a trialkylsilyl chloride with an excess of cyanide ion from a suitable source, such as tetraalkylammonium cyanide. The residual cyanide ion can serve as a co-catalyst for the polymerization.

Similarly, initiators of the formulas $(R^1)_2M(Z^1)_2$ or $O[M(R^1)_2Z^1]^2$ wherein $R^1$, M and $Z^1$ are as defined above are either known compounds or can be prepared by the above methods employing, for example: dihalides of the formula $(R^1)_2MCl_2$ in place of halides $(R^1)_3MCl$ in the reaction with lithium-containing intermediates as described above; or dihydrides $(R^1)_2HM\text{-}O\text{-}MH(R^1)_2$ in place of $(R^1)_3MH$ in the reaction with the monomers $CH_2 = C(R^3)C(O)X'$.

As already stated above, initiators for use in the invention process include, but are not limited to, the following:
N,N-dimethyl-(trimethylsilyl)phosphorodiamidite;
(trimethylsilyl)dimethyl phosphite;
tris(trimethylsilyl) phosphite;
N,N-dimethyl-P-[3-methoxy-3-((trimethylsilyl)oxy)-2-propenyl]phosphonic diamide;
N,N-dimethyl-P-[3-methoxy-2-methyl-3-((trimethylsilyl)oxy)-2-propenyl]phosphonic diamide;
[3-methoxy-3-((trimethylsilyl)oxy)-2-propenyl]phosphonic acid, bis(trimethylsilyl) ester;
[3-methoxy-2-methyl-3-((trimethylsilyl)oxy)-2-propenyl]phosphonic acid, bis(trimethylsilyl) ester;
[3-methoxy-3-((trimethylsilyl)oxy)-2-propenyl]phosphonic acid, diethyl ester;
[(2-(1,1-dimethylethyl-5-phenyl-1,3-dioxol-4-yl)oxy]trimethylsilane; [(2-methyl-5-phenyl-1,3-dioxol-4-yl)oxy]-trimethylsilane;
[(methoxy)(1,7,7-trimethylbicyclo[2.2.1]heptan-2-ylidene)methoxy]trimethylsilane;
1,3-bis[(1-methoxy-1-butenyl)oxy]-1,1,3,3-tetramethyl-disiloxane;
bis[(1-methoxy-2-methyl-1-propenyl)oxy]methylsilane;
bis[(1-methoxy-2-methyl-1-propenyl)oxy]dimethylsilane;
and, except when a bifluoride catalyst is used, trimethyl(methylthio)silane; and
trimethyl(phenylthio)silane. The bis(methyl)- and bis(dimethyl)silanes listed above are examples of bifunctional initiators which can initiate more than one polymer chain.

The immediately above initiators are either known compounds or can be prepared by known methods from known starting materials. Initiators of the aforesaid formula $(R^1)_2M(Z^1)_2$ can be prepared from nitriles $(R^2)(R^3)$ CHCN, esters, ketones, or substituted amides $(R^2)(R^3)CHC(O)X'$ wherein X' is as defined above by reaction with, for example, n -butyllithium or lithium diisopropylamide, followed by reaction with a polyhalide of the formula $(R^1)_2MCl_2$ wherein $R^1$ and M are as defined above.

Initiators of the aforesaid formula $O[M(R^1)_2Z^1]_2$ wherein, in $Z^1$, $R^2$ or $R^3$ is $CH_3$ also can be prepared from the monomers using appropriate procedures. For example, $CH_2 = C(R^3)C(O)X'$ can be reacted with the dihydride $(R^1)_2HM\text{-}O\text{-}MH(R^1)_2$ wherein $R^1$ is as defined above.

Useful initiators of the invention include those wherein the activating substituent Z, $Z^1$, $Z^4$ or $Z^5$ also contains one or more reactive initiating substituents, resulting in branched polymers. Such initiators can be prepared in situ by reacting a monomeric compound containing at least one reactive substituent with a "simple" initiator $(R^1)_3MZ$, $(R^1)_3MZ^4$ or $(R^1)_3MZ^5$, or precursor thereof, containing at least one initiating site.

It is to be understood that the useful initiators include nitriles, esters, amides, and ketones, and their corresponding ketene imine and enol forms, all of which are active in the polymerization process of this invention. Moreover, the initiators wherein the activating moiety Z, $Z^1$, $Z^4$ or $Z^5$ contains R, R', R", $R^1$, $R^2$, and/or $R^3$ can also have, like the monomer, one or more functional substituents attached to an aforesaid R group, provided such substituents do not interfere with polymerization. Functional substituents which are

useful include, but are not limited to,

$-OSi(R^1)_3$ , $-CO_2R$ , $-OC(O)R$ , $C_{1-20}$ perfluoroalkyl,

$-NR'R''$ , $-C(O)NR'R''$ , $-CN$ , $-OCH(R)OR$ , $-OC(R)(R)OR$ ,

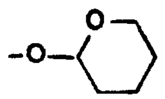 , $-CO_2Si(R^1)_3$, 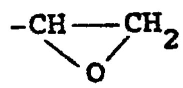, $-C(CH_3)=CH_2$ , $-SR$,

$-P(O)NR'R'')_2$, $-P(O)[OSi(R^1)_3]_2$ and $-P(O)(OR^1)_2$.

Such substituents, either directly or after treatment, for example, hydrolysis, provide functional sites along or at the end of polymer chains suitable for cross-linking, chain extension, chain branching, or for modifying properties such as water sorption, UV absorption, and the like. In the practice of this invention, as described below, an initiator moiety forms one end of a polymer chain or branch and hence said polymers can be terminally or centrally functionalized by appropriate initiator selection and polymer treatment.

The co-catalysts used in the invention process are either known compounds or can be prepared by known methods from known compounds. Suitable, that is, effective, co-catalysts which are useful in the invention process include zinc iodide, bromide, and chloride, mono- and dialkylaluminum halides, dialkylaluminum oxides, tris(dimethylamino)sulfonium difluorotrimethylsilicate, tris(dimethylamino)sulfonium cyanide, tetraphenylarsonium cyanide, tris(dimethylamino)sulfonium azide, tetraethylammonium azide, boron trifluoride etherate, alkali metal fluorides, alkali metal cyanides, alkali metal azides, tris(dimethylamino)-sulfonium difluorotriphenylstannate, tetrabutylammonium fluoride, tetramethylammonium fluoride, and tetraethylammonium cyanide. Preferred co-catalysts include sources of fluoride ions, especially tris-(dimethylamino)sulfonium difluorotrimethyl silicate and tetrabutylammonium fluoride; tetraalkylammonium cyanides; zinc bromide, and zinc chloride.

Most preferred co-catalysts are sources of bifluoride ions, such as, for example, those described in European Patent Application No. 84302261.7, (Publication No. 0 121 439), particularly tris(dimethylamino)-sulfonium bifluoride, bifluorides of the alkali metals, especially potassium, ammonium bifluoride, tetraalkylammonium bifluorides and tetraarylphosphonium bifluorides.
Tris(dimethylamino)sulfonium bifluoride may be prepared by reacting tris(dimethylamino)sulfonium difluorotrimethylsilicate with water or a lower alkanol, for example, methanol; water is preferred since higher yields are obtained.

The process of the invention is carried out at about -100° C to about 150° C, preferably 0° C to 50° C, most preferably at ambient temperature. A solvent is desirable but not essential.

Suitable solvents are aprotic liquids in which the monomer, initiator and co-catalyst are sufficiently soluble for reaction to occur; that is, the materials are dissolved at the concentrations employed. Suitable solvents include ethyl acetate, propionitrile, toluene, xylene, bromobenzene, dimethoxyethane, diethoxyethane, diethylether, tetramethylene sulfone, N,N-dimethylformamide, N,N-dimethylacetamide, N-methylpyrrolidone, anisole, 2-butoxyethoxytrimethylsilane, cellosolve acetate, crown ethers such as 18-crown-6. acetonitrile, and tetrahydrofuran. Acetonitrile and tetrahydrofuran are preferred solvents when a co-catalyst wherein the active species is an anion is used. When the co-catalyst employed is a zinc compound, suitable solvents are limited to hydrocarbons and chlorinated hydrocarbons, preferably dichloromethane or 1,2-dichloroethane.

The monomers used in the process of the invention are generally liquids and can be polymerized without a solvent, although a solvent is beneficial in controlling temperature during exothermic polymerization. When a solvent is used, the monomer may be dissolved or dispersed therein at concentrations of at least 1 wt %, preferably at least 10 wt %. The initiator is employed at a concentration such that the monomer/initiator molar ratio is greater than 1, preferably greater than 5. The co-catalyst is normally present in such an amount that the molar ratio of initiator to co-catalyst is in the range 0.1 to 10,000, preferably 10 to 100.

In the polymerization process of the invention, it is preferable to charge the initiator, co-catalyst, and solvent, if used, to the polymerization vessel before adding the monomer(s), especially if polymers of narrow molecular weight distribution are desired. In selected cases, such as the polymerization of methyl

methacrylate initiated by trimethylsilyl nitrile using a relatively low concentration of cyanide or fluoride ions as the co-catalyst, polymerization takes place after an induction period of several minutes. In such cases, all materials, including the monomer(s), may be charged together or independently, and mixed in place. Such an initiator/co-catalyst system is preferred to obtain relatively monodisperse polymers. By a monodisperse polymer is meant one having a narrow molecular weight distribution. that is, $\overline{M}_w/\overline{M}_n$ is about 1. At higher values of $\overline{M}_w/\overline{M}_n$ the polymer is said by the art to be polydisperse.

Although, as indicated above, it is preferable to charge all necessary initiator, co-catalyst and solvent to the polymerization vessel before adding monomer(s), subsequent polymerization rate being controlled by monomer addition, further additions of co-catalyst may sometimes be necessary to sustain polymerization.

The final (non-living) polymeric product obtained by means of the process of the invention is formed by exposing the "living" polymer to an active hydrogen source, such as moisture or an alcohol, for example, methanol.

The "living" polymers of the invention will remain "living" for substantial periods provided they are protected from active hydrogen sources such as water or alcohols. Solutions of "living" polymers in inert solvents, such as hydrocarbons, are especially useful for preserving and conveying the "living" polymers. Films and fibers of the "living" polymers may be cast or spun from such solutions, or the polymer may be isolated from solution and further processed, for example, pelletized or granulated.

It is to be understood that the final (non-living) polymeric product does not include the enol or imine species of Q in the aforesaid formula for the "living" polymer of the invention. For example. a "living" polymer prepared by polymerizing methyl methacrylate using [(1-methoxy-2-methyl-1-propenyl)oxy]-methylsilane as the initiator contains, at its living end, the enolic grouping

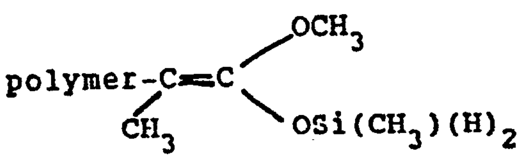

which, upon quenching, is converted to

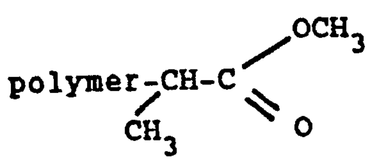

.

The process of the invention is useful for preparing homopolymers or copolymers of the monomers described above. In either case, the polymers obtained are "living" polymers which may be of high or low molecular weight and having a broad or narrow molecular weight distribution ($\overline{M}_w/\overline{M}_n$). At a given temperature, $\overline{M}_w/\overline{M}_n$ is primarily a function of the relative rates of initiation and polymerization. Rate of initiation, $r_i$, depends on initiator and co-catalyst type and relative concentrations. Polymerization rate, $r_p$, is a function of monomer reactivity and co-catalyst type and concentration. For monodispersity, $r_i/r_p$ is equal to or greater than 1, that is, the initiation rate is at least as fast as the polymerization rate and all chains grow simultaneously. Such conditions characterize the preparation of "living" polymers by anionic polymerization techniques of the art wherein $\overline{M}_w/\overline{M}_n$ ratios only slightly above the theoretical limit of 1 are obtainable; for example, poly(methyl methacrylate) of $\overline{M}_w/\overline{M}_n$ of about 1.01 to 1.1 are known in the art, as are copolymers of methyl methacrylate and other alkyl methacrylates. Control of $\overline{M}_w/\overline{M}_n$ permits useful variation in polymer physical properties, such as glass transition temperature, hardness, heat distortion temperature, and melt viscosity.

The polymerization process of the present invention involves a "living" mechanism having several similarities with anionic polymerization. For example, initiation and polymerization may be represented by conventional equations wherein the initiator moiety, such as $(R^1)_3M$, is located at one end of the polymer chain or branch which remains "living" even when the monomer supply is consumed; the activating substituent, such as Z, $Z^1$, $Z^4$ or $Z^5$, is located at the other end of the polymer chain or branch. The terminal initiator moiety, unless chemically deactivated, is capable of initiating further polymerization with the same or different monomer, with resultant chain lengthening. Copolymers with specific monomer sequences, or block polymers, can thus be prepared.

Although the present process resembles anionic polymerization, there are significant differences which have commercial significance. These differences include the ability to copolymerize methacrylate and acrylate monomers, or combinations of acrylate monomers, for example, ethyl and sorbyl acrylates, to relatively monodisperse copolymers. Such copolymers are difficult or impossible to obtain by known processes such as anionic polymerization or free-radical polymerization. Moreover, whereas anionic polymerization processes which provide relatively monodisperse polymers are carried out at low temperatures, usually well below -10 °C, which require expensive refrigeration equipment for commercial operation, the polymerization process of the invention is operable over a wide temperature range, from about -100 °C to about 150 °C. It is conveniently operable with many commercially important monomers at about ambient temperatures.

The process of this invention can also be used to prepare polymers containing one or more specifically located functional groups which are unreactive under polymerizing conditions but are useful for subsequent preparation of block copolymers or crosslinked polymers. The functional groups may be introduced by using either a monomer or an initiator, or both, containing a protected functional substituent, or by chemically deactivating (capping) the "living" end of the polymer chain or branch with a functionalized capping agent. If the capping agent contains more than one capping site, then more than one polymer chain can be joined together or coupled to give doubled or "star"-branched polymers, similar to the doubled or star-branched polymers obtained when the initiator contains more than one initiating site, or the monomer contains more than one reactive site capable of reacting with initiators, as described previously. Even if the capping agent contains only one capping site, the agent may also contain other functional groups which provide reactive terminal sites to the polymer, useful for subsequent preparation of block copolymers or cross-linked polymers, or for otherwise modifying polymer properties. Examples of capping agents containing one or more capping sites include 4-dimethoxymethylbenzyl bromide, 4-chloromethylstyrene,
4-methoxymethoxymethylbenzyl bromide,
1,4-bis(bromomethyl)benzene, 1,3,5-tris(bromomethyl) benzene, terephthaldehyde and toluene diisocyanate. Capping agents containing one capping site and one or more functional groups that are unreactive under capping conditions include
1-bromomethyl-4-dimethoxymethylbenzene,
1-bromomethyl-4-(methoxymethoxymethyl)benzene,
4-chloromethylstyrene,
4-(trimethylsilylcarboxy)benzaldehyde,
4-nitrobenzaldehyde, 2,5-furanyldione,
1,3-bis(carbonylamino)toluene and
4,4'-bis(carbonylamino)diphenylmethane. In general, capping agents which are useful in the process of the invention include aliphatic, aromatic or aliphatic-aromatic compounds containing one or more capping functions such as -CHO,

$$-\overset{\displaystyle O}{\overset{\|}{C}}-,$$

-NCO, -Br, -Cl and $-TiC1_3$, and which may optionally also contain non-capping functional substituents, such as $-NO_2$, $-OSi(R^1)_3$ and $-CO_2Si(R^1)_3$. Reaction of capping agents with the "living" polymer ends proceeds similarly to known reactions of non-polymeric trialkylsilanes. The capping reaction is normally carried out in an organic liquid wherein both polymer and capping agent are soluble; frequently, the polymerization solvent is suitable. The reaction is preferably carried out in the presence of fluoride ion as catalyst; tris(dimethylamino)sulfonium difluorotrimethylsilicate is a preferred catalyst.

In the following examples of specific embodiments of this invention, parts and percentages are by weight and temperatures are in degrees Celsius unless otherwise specified. The polydispersity (D) of the polymer products of the examples is defined by $D = \overline{M}_w/\overline{M}_n$, the molecular weights being determined by gel permeation chromatography (GPC). Unless otherwise specified, the "living" polymer products obtained in the invention process were quenched by exposure to moist air before molecular weights were determined.

EXAMPLE 1

Preparation of Three-Branched Star Poly(methyl methacrylate)

A. To 4.41 ml (3.838 g, 12.87 mmol) of tris(trimethylsilyl)phosphite at 65° was added slowly 1.0 g (4.29 mmol) of trimethylolpropanetriacrylate (purified by extraction with hexane and passage of extract through neutral alumina). After 1 h, NMR showed no residual acrylate and was in agreement with

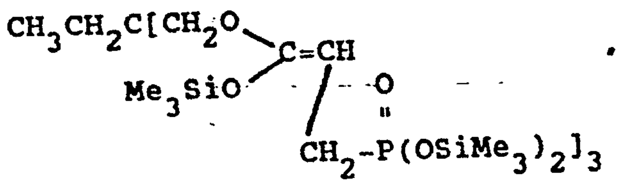

a viscous oil. Anal. Calcd. for $C_{42}H_{101}O_{15}P_3Si_9$: C, 42.32: H, 8.54; P, 7.80; Si, 21.21. Found: C, 41.05: H, 8.17: P, 8.87; Si, 19.91.

B. To a solution of 1.91 g (1.6 mmol) of the product of Part A in 30 ml of tetrahydrofuran was added 0.1 ml of 1M tris(dimethylamino)sulfonium bifluoride/acetonitrile and 15 g (16.2 ml, 150 mmol) of methyl methacrylate. A slow exothermic reaction was observed. After stirring 18 h, the solution was evaporated in vacuo to 12.6 g (80.7%) of solid polymer. GPC: $\overline{M}_n$ 13,000, $\overline{M}_w$ 28,600, D 2.20 (theoretical $\overline{M}_n$ 7500).

To convert the silylphosphonate terminal groups to phosphonic acid groups, the product was stirred at reflux for 1 h with 15 ml of methylene chloride, 6 ml of methanol, and 1 ml of 1M tetrabutylammonium fluoride/tetrahydrofuran. The solution was evaporated and the residue was dissolved in methylene chloride, washed with water, dried and concentrated. The purified three-star triphosphonic acid polymer was precipitated with hexane to give 6 g of solid polymer. The NMR spectrum showed the absence of any trimethylsilyl groups.

## EXAMPLE 2

Polymerization of Methyl Methacrylate with Bis[(1-methoxy-2-methyl-1-propenyl)oxy]methylsilane and tris-(dimethylamino)sulfonium Bifluoride

To a solution, in 20 ml of anhydrous tetrahydrofuran, of bis[(1-methoxy-2-methyl-1-propenyl)oxy]-methylsilane (1.23 g, 5 mmol), prepared by the reaction of methyldichlorosilane with the lithium enolate of methyl isobutyrate (bp 54.8°/0.5-57.2°/0.7 mm), and 20 µL of 1 M tris(dimethylamino)sulfonium bifluoride/acetonitrile was added 10 g (10.8 ml, 100 mmol) of methyl methacrylate (purified by passage over neutral alumina under argon) containing 10 µl of 1 M tris(dimethylamino)sulfonium bifluoride. An exothermic reaction persisted during the monomer addition. After 30 minutes 5.0 g (5.4 ml, 50 mmol) of methyl methacrylate was added, producing an exothermic reaction. Addition of 3 ml of methanol produced an apparent decrease in viscosity. Evaporation in vacuo gave 17.5 g of solid poly(methyl methacrylate).

Gel permeation chromatography shows $\overline{M}_n$ 1410, $\overline{M}_w$ 1550, D 1.10 (theoretical $\overline{M}_n$ 1600).

## EXAMPLE 3

Polymerization of Methyl Methacrylate with [3-methoxy-2-methyl-3-((trimethylsilyl)oxy)-2-propenyl]-phosphonic Acid, Bis(trimethylsilyl) Ester and Tris(dimethylamino)sulfonium Bifluoride

A. [3-Methoxy-2-methyl-3-((trimethylsilyl)oxy)-2-propenylphosphonic acid, bis(trimethylsilyl) ester was prepared by stirring a mixture of equimolar amounts of methyl methacrylate and tris(trimethylsilyl)-phosphite at 114° for 3.5 h under argon. The product was distilled in a small Vigreux column. b.p. 91°/0.23 mm, Anal . Calcd. for
$C_{14}H_{35}O_5PSi_3$ : C, 42.18; H, 8.85; P, 7.77, Si
21.14. Found: C, 42.17; H, 8.54, P, 8.07; Si 21.12.

B. To a stirred solution of 3.12 g (3.2 ml, 7.84 mmol) of the phosphonic acid ester prepared in Part A and 0.3 ml of a 1 M solution in acetonitrile of tris(dimethyamino)sulfonium bifluoride in 100 ml of tetrahydrofuran under an argon atmosphere was added during 1 h 55 ml (50.9 g, 509 mmol) of methyl methacrylate (purified by passage over a short column of neutral alumina). The solution was stirred for two h after the end of the exotherm. Then, 30 ml of methanol and 2 ml of 1M tetrabutylammonium/tetrahydrofuran was added and the resulting solution was stirred at reflux for 1.5 h and concentrated in a rotary evaporator. The product was precipitated from the concentrated solution by addition to water. The polymer was filtered and dried in a vacuum oven at 100° to give 49.7 g of poly-(methyl methacrylate-1-phosphonic acid). GPC: $\overline{M}_n$ 5900, $\overline{M}_w$ 5900, D 1.00 (theoretical $\overline{M}_n$ 6650); $^1H$ NMR: δ(ppm from external $Me_4Si$, $CDCl_3$ solvent) 7.9 ppm [broad, $PO(OH)_2$].

EXAMPLE 4

Polymerization of Methyl Methacrylate with Tris(trimethylsilyl)phosphite and Bifluoride Catalyst

To a stirred solution of 1.49 g (1.75 ml, 5 mmol) of tris-(trimethylsilyl)phosphite and 0.31 ml of 1 M tris-(dimethylamino)sulfonium bifluoride/acetonitrile in 15 ml of tetrahydrofuran under argon was added 10 g (10.8 ml, 100 mmol) of methyl methacrylate. After 20 minutes an exothermic reaction was observed, and the temperature rose to 36°. After stirring 18 h the viscous solution was evaporated in vacuo to 12.1 g of solid phosphonate-substituted poly(methyl methacrylate). GPC: $\overline{M}_n$ 15,300, $\overline{M}_w$ 29,400, D 1.92 (theoretical $\overline{M}_n$ 2300).

EXAMPLE 5

A. If 365 g of a copolymer of methyl methacrylate and 2-trimethylsiloxyethyl methacrylate, is dissolved in 135 g of xylene, a solution containing 73% solids by weight can be obtained.

B. The following compositions can be prepared and then blended together to form a high-solids light blue enamel:

| (i) Silica Mill Base | Parts By Weight |
|---|---|
| Acrylic polymer solution (from Part A) | 389.65 |
| Xylene | 200.92 |
| Ethylene glycol monoethyl ether acetate | 200.84 |
| Fine divided silica (treated with dimethyl dichloro silane) | 56.59 |
| Total | 848.00 |

The above constituents can be charged into a conventional sand mill and ground to form a mill base.

| (ii) Iron Pyrophosphate Mill Base | Parts By Weight |
|---|---|
| Acrylic polymer solution (from Part A) | 494.24 |
| Xylene | 233.28 |
| Iron pyrophosphate pigment | 207.48 |
| Total | 935.00 |

The above constituents can be charged into a conventional sand mill and ground to form a mill base.

| (iii) Indo Blue Mill Base | Parts By Weight |
|---|---|
| Acrylic polymer solution (60% solids in a solvent mixture of petroleum naphtha, ethylene glycol monoethyl ether acetate, and butanol, of a polymer of styrene/butyl acrylate/hydroxyethyl acrylate/acrylic acid, weight ratio 50/38/8/4 prepared by conventional free radical polymerization) | 50.00 |
| Butyl acetate | 43.00 |
| Indanthrone Blue Toner | 7.00 |
| Total | 100.00 |

The above constituents can be mixed together and then ground in a conventional sand mill to form a mill base.

| (iv) Blue Mill Base | Parts By Weight |
|---|---|
| Portion 1 | |
| Acrylic polymer solution (described for composition (iii)) | 14.30 |
| Butyl acetate | 57.70 |
| Portion 2 | |
| "Monastral" Blue pigment | 8.00 |
| Portion 3 | |
| Acrylic polymer solution (described for Portion 1) | 20.00 |
| Total | 100.00 |

Portion 1 can be charged into a mixing vessel and mixed for 15 minutes, Portion 2 can be added and mixed for 1 h and Portion 3 can be added and mixed for 1 h. The resulting composition can be ground in a conventional sand mill to form a mill base.

| (v) Aluminum Flake Mill base | Parts By Weight |
|---|---|
| Acrylic polymer solution (from Part A) | 509.41 |
| Xylene | 198.91 |
| Aluminum paste (65% aluminum flake in mineral spirits) | 188.68 |
| Total | 897.00 |

The above constituents can be thoroughly mixed together to form a mill base.

| (vi) Para-Toluene Sulfonic Acid Solution | Parts By Weight |
|---|---|
| Para-toluene sulfonic acid | 131.54 |
| Methanol | 515.08 |
| Dimethyl oxazolidine | 92.38 |
| Total | 739.00 |

The above constituents can be thoroughly blended together to form an acid solution.

A light blue paint can be prepared by thoroughly blending together the following constituents:

| | Parts By *Weight* |
|---|---|
| Silica mill base (described above in Part (i)) | 196.00 |
| Iron pyrophosphate mill base (described above in Part (ii)) | 29.45 |
| Acrylic polymer solution (from Part A) | 210.22 |
| 2-(2'-hydroxyphenyl)-benzotriazole | 8.67 |
| Nickel bis-[O-ethyl(3,5 di-tertiary-butyl-4-hydroxy-benzyl)phosphonate] | 4.34 |
| Tetrakis methylene 3-(3',5'-dibutyl-4'-hydroxyphenyl)-propionate methane | 0.41 |
| Methanol | 30.27 |
| Blue mill base (described above in Part (iv)) | 5.07 |
| Indo blue mill base (described above in Part (iii)) | 19.39 |
| Aluminum flake mill base (described above in Part (v)) | 66.67 |
| Melamine resin (methoxy/butoxy-methyl melamine) | 174.24 |
| Methyl amyl ketone | 25.03 |
| Methyl isobutyl ketone | 24.46 |
| Diisobutyl ketone | 24.70 |
| Para-toluene sulfonic acid solution (described above in Part (vi)) | 7.36 |
| Amine solution (25% dimethyl oxazolidine in methanol) | 14.72 |
| Total | 841.00 |

The above described composition can be sprayed onto a steel panel primed with an alkyd resin primer and baked for 30 minutes at about 120° to give a finish which is expected to be glossy and hard,

with a good appearance, resistant to weathering, solvents, scratches and chipping. These properties indicate utility for finishing automobiles and trucks.

C. A clear enamel composition can be prepared by blending:

| | Parts By Weight |
|---|---|
| Acrylic polymer solution (from Part A) | 89.04 |
| Melamine resin (methoxymethyl melamine) | 35.00 |
| Para-toluene sulfonic acid | 0.20 |
| Xylene | 42.43 |
| Total | 166.67 |

D. A steel panel can be sprayed with the color coat of Part B, flash dried, then sprayed with the clear coat of Part C and then baked at 120° for 30 minutes. It is expected that a color coat/clear coat finish would be formed that has excellent gloss and appearance and would be durable and weatherable and useful as an exterior finish for trucks and automobiles.

EXAMPLE 6

The following constituents can be blended together to form a lacquer paint:

| | Parts By Weight |
|---|---|
| Portion 1 | |
| Acetone | 9.30 |
| Alkyd resin solution (85% solids alkyd resin of ethylene glycol/phthalic anhydride/coconut oil having a hydroxyl No. of about 20 and an acid No. of about 8-10 in toluene and having a Gardner Holdt viscosity of about 2 measured at 25°) | 9.53 |
| Portion 2 | |
| Aluminum flake mill base (29.8% polymethyl methacrylate* 12.4% aluminum flake and 57.8% solvent mixture of toluene and acetone) | 15.48 |
| Blue Mill base (10% "Monastral" blue flake, 16% polymethyl methacrylate*, 74% solvent mixture of toluene and acetone) | 3.39 |
| Carbon Black Mill Base (6% carbon black pigment, 24% polymethyl methacrylate*, 70% solvent mixture of toluene, acetone, ethylene glycol monoether acetate, butyl acetate | 0.33 |
| Green Mill Base (8.3% "Monastral" green pigment, 21.1% polymethylmethacrylate*, 70.6% solvent mixture of toluene/acetone/xylene) | 0.36 |

| | |
|---|---|
| Portion 3 | |
| Silicone solution (4% silicone SF69 in xylene | 0.03 |
| PMMA solution (40% solids of polymethyl methacrylate in THF | 26.96 |
| CAB solution (25% solids cellulose acetate butyrate having a 37% butyryl content 2 second viscosity in toluene/ acetone, 70/30 ratio) | 12.98 |
| CAB Solution II (15% solids cellulose acetate butyrate having a 38% butyryl content and a 20 second viscosity in toluene/acetone, 70/30 ratio | 21.64 |
| Total | 100.00 |

*polymer prepared by conventional free-radical polymerization

Portion 1 can be charged into a mixing vessel and mixed for 10 minutes, portion 2 can be added and mixed for 10 minutes and then portion 3 can be added and mixed for 20 minutes to form a lacquer paint.

The reduced lacquer can be sprayed onto phosphatized steel panels primed with an alkyd resin primer and coated with a sealer. Three coats may be sprayed onto the panels and the panels baked at about 165° for 30 minutes to provide a finish of about 2.2 mils thickness.

The resulting finish is expected to be smooth, glossy, water resistant, gasoline resistant, chip resistant and weatherable, with excellent distinctness of image, useful as a high quality automotive coating.

## EXAMPLE 7

An aqua metallic air drying enamel was prepared from the following:

28.5 parts Carbon black
11.0 parts Phthalo blue toner
42.5 parts "Monastral" Green cake
19.0 parts Phthalo blue cake
157.0 parts Aluminum paste-medium
8.0 parts Titanium dioxide pigment
390.0 parts Ethyl acrylate/sorbyl acrylate copolymer
110.0 parts Xylene
110.0 parts Cellosolve® acetate
4.0 parts Cobalt naphthenate

The above composition was sprayed onto a steel panel primed with an alkyd resin primer and allowed to cure at ambient temperature. After about a week, the finish was hard and resistant to solvents and scratches.

## Best Mode For Carrying Out The Invention

The best mode presently contemplated for carrying out the invention is demonstrated and/or represented by Examples 1, 2 and 5 to 7.

Industrial Applicability

The invention process provides useful and well known polymers containing functional substituents, for example, homopolymers and copolymers of acrylate and/or methacrylate monomers, such polymers heretofore being made usually by anionic polymerization techniques. The invention process also provides a means for making certain commercially desirable, relatively monodisperse copolymers of methacrylate and acrylate comonomers, such copolymers being difficult or impossible to obtain by known processes such as anionic polymerization or free-radical polymerization. The invention process also provides "living" polymer which may be cast or spun, for example, into a film or fiber, from solution or dispersion (in or using an aprotic solvent) or isolated, processed, and then further polymerized. The solutions or dispersions may also be formulated with clear or opaque pigments and other ingredients which can be converted into protective coatings and finishes for manufactured articles, such as metal, glass and wood.

Various types of finishes can be made which take advantage of the properties of the polymers disclosed herein. These include solvent-based and water-based finishes, powder coatings, electrocoating compositions including anodic and cathodic, coatings to be applied by spraying or other techniques, coatings which contain cross linkers including, but not limited to, melamine resins and isocyanate resins, and coatings which can be cured by a variety of techniques including heat, various types of radiant energy, exposure to air, and various vapors, such as moisture or amines. After the "living" polymers disclosed herein have been quenched, such as by reaction with water or alcohols, the need to avoid moisture may no longer exist, and aqueous coating compositions can be made therefrom.

## Claims

**1.** A process comprising polymerizing the monomer selected from the group consisting of

$CH_2=C(Y)X$ , 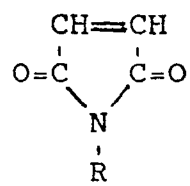

and mixtures thereof
wherein:
X is -CN, -CH=CHC(O)X' or -C(O)X';
Y is -H, $-CH_3$, -CN or $-CO_2R$, provided, however, when X is CH=CHC(O)X', Y is -H or $-CH_3$;
X' is $-OSi(R^1)_3$ , -R, -OR or -NR'R";
each $R^1$, independently, is hydrocarbyl of up to 20 carbon atoms;
R is hydrocarbyl of up to 20 carbon atoms, optionally containing one or more ether oxygen atoms within aliphatic segments thereof, and optionally containing one or more functional substituents that are unreactive under polymerizing conditions; and
each of R' and R" is independently selected from $C_{1-4}$ alkyl by contacting the one or more monomers under polymerizing conditions with:
(i) the initiator of the formula $(R^1)_3MZ$ wherein:
$R^1$ is as defined above;
Z is an activating substituent selected from the group consisting of

-CN, 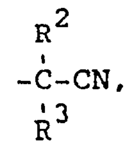 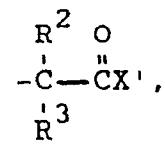

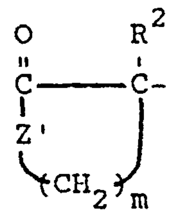 , 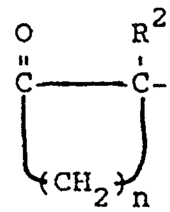 ,

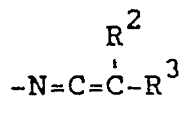 , 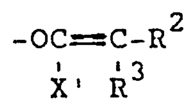 , 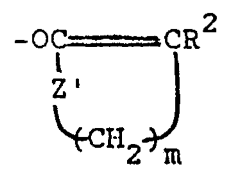 ,

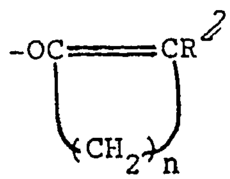

and mixtures thereof
X' is as defined above for the monomer;
each of $R^2$ and $R^3$ is independently selected from H and hydrocarbyl of up to 20 carbon atoms, optionally containing one or more ether oxygen atoms within aliphatic segments thereof, and optionally containing one or more functional substituents that are unreactive under polymerizing conditions; and
Z' is O or NR';
m is 2, 3 or 4;
n is 3, 4 or 5; and
M is Si, Sn, or Ge,
provided, however when Z is

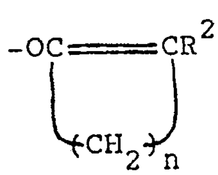 or 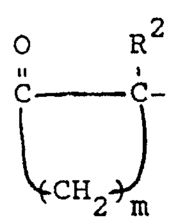 ,

;

M is Sn or Ge; and
(ii) a co-catalyst which is a source of fluoride, cyanide, azide or bifluoride ions or a suitable Lewis acid,
to produce "living" polymer having repeat units of the one or more monomers,
said process being further characterized in that:
(a) $R^1$ is H, provided that at least one $R^1$ group is not H; and/or
(b) the initiator is of the formula $(R^1)_2M(Z^1)_2$ or $O[M(R^1)_2z^1]_2$ wherein

$R^1$ and M are as defined above and $Z^1$ is an activating substituent and is

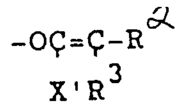

wherein X', $R^2$ and $R^3$ are as defined above; and/or
(c) Z is selected from the group consisting of -SR, $-OP(NR'R'')_2$, $-OP(OR^1)_2$, $-OP[OSi(R^1)_3]_2$ and mixtures thereof,
wherein R, $R^1$, R' and R'' are as defined above; and/or
(d) $R^2$ and $R^3$ taken together are

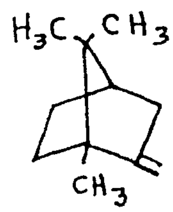

provided, however, Z is

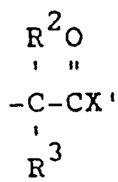 or 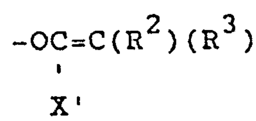

and/or $Z^2$ is

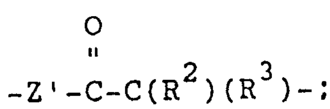

and/or
(e) either X' and $R^2$ or X' and $R^3$ taken together are

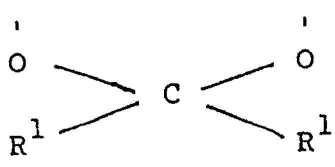

provided, however, Z is

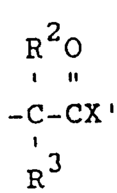 or 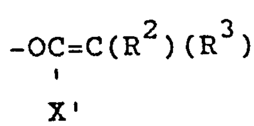

and/or $Z^2$ is

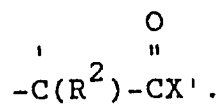

2. A "living" polymer of the formula:

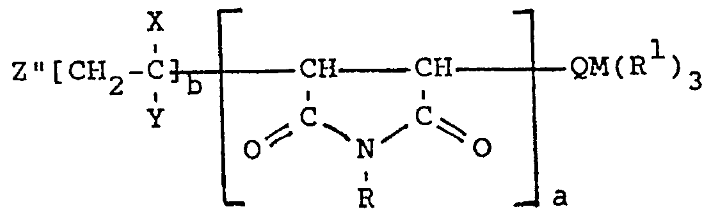

wherein:

Z" is selected from the group consisting of

-CN, 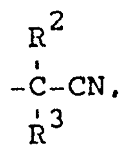, 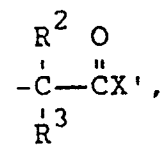, 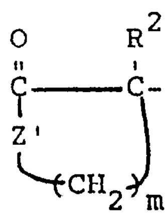 and 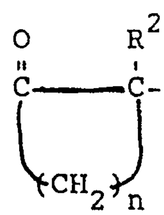 ;

each of a and b is independently selected from 0 or a number in the range 1 to about 100,000, provided, however, (a + b) is at least 3;

Q is the divalent radical selected from the group consisting of

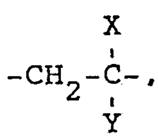, 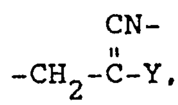, 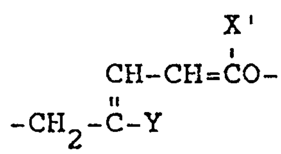, 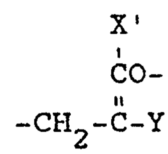

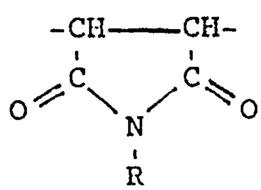, 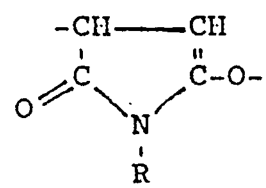

and mixtures thereof;

X is -CN, -CH=CHC(O)X' or -C(O)X';

Y is -H, $-CH_3$, -CN or $-CO_2R$,

provided, however, when X is -CH=CHC(O)X', Y is -H or $-CH_3$;

X' is $-OSi(R^1)_3$, -R, -OR or -NR'R";

each $R^1$, independently, is hydrocarbyl of up to 20 carbon atoms;

R is hydrocarbyl of up to 20 carbon atoms, optionally containing one or more ether oxygen atoms within aliphatic segments thereof, and optionally containing one or more functional substituents that are unreactive under polymerizing conditions;

each of R' and R" is independently selected from $C_{1-4}$ alkyl;

each of $R^2$ and $R^3$ is independently selected from H and hydrocarbyl of up to 20 carbon atoms, optionally containing one or more ether oxygen atoms within aliphatic segments thereof, and optionally containing one or more functional substituents that are unreactive under polymerizing conditions;
Z' is O or NR' wherein R' is as defined above;
m is 2, 3 or 4;
n is 3, 4 or 5; and
M is Si, Sn, or Ge,
said polymer further being characterized in that:
(a) $R^1$ is H, provided that at least one $R^1$ group is not H; and/or
(b) Z" is selected from $-P(O)(NR'R")_2$, $-P(O)(OR^1)_2$, $-P(O)[OSi(R^1)_3]_2$ and -SR; and/or
(c) the "living" polymer is of the formula

(I) $R_p([Z^3\overline{P}\,QM(R^1)_2]_2(O))_p$; (II) $(R^1)_2M(Q\overline{P}\,Z")_2$; or (III) $O[M(R^1)_2Q\overline{P}\,Z"]_2$;

wherein:
$R_p$ is a hydrocarbyl radical which is aliphatic, alicyclic, aromatic or aliphatic-aromatic containing up to 20 carbon atoms, or a polymeric radical containing at least 20 carbon atoms, of valence p, optionally containing one or more ether oxygen atoms, keto groups and/or functional substituents that are unreactive under polymerizing conditions;
$Z^3$ is a diradical selected from the group consisting of

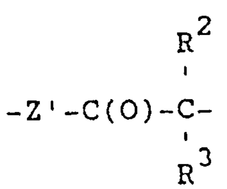 , 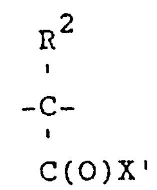 , 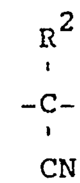 , 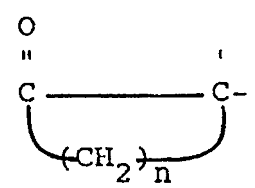 ,

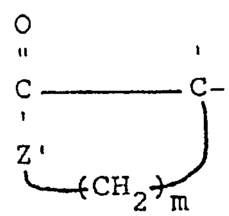

and mixtures thereof;
Z', $R^2$, $R^3$, X', m and n are as defined above;
$\overline{P}$ is a divalent polymeric radical of the formula

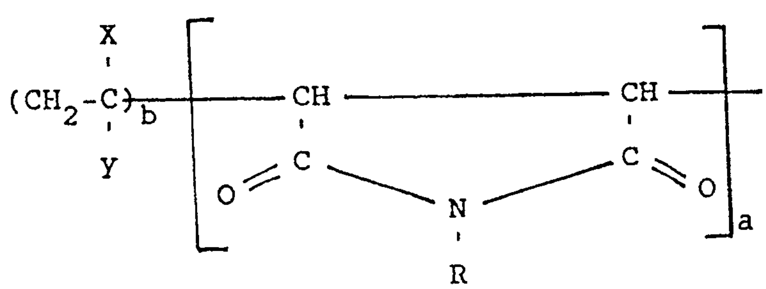

wherein X, Y, R, a and b are as defined above;
Q, M and $R^1$ are as defined above;
and
p is an integer and is at least 1,
provided, however,
(i) when $Z^3$ is

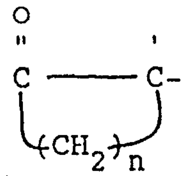 ,

M is Sn or Ge;

(ii) when $Z^3$ is

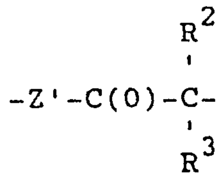 ,

$R^2$ and $R^3$ taken together are

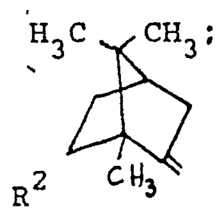 ;

(iii) when $Z^3$ is

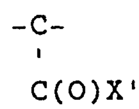 ,

$R^2$ and X' taken together are

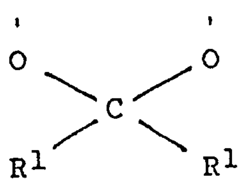 ;

and

(iv) in Formulae (II) and (III), Z" is

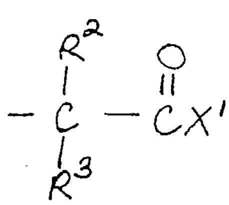

**3.** Process comprising polymerizing the monomer selected from the group consisting of

$CH_2=C(Y)X$ , 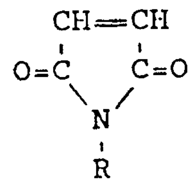

and mixtures thereof
wherein:
X is -CN, -CH=CHC(O)X' or -C(O)X';
Y is -H, $-CH_3$, -CN or $-CO_2R$, provided, however, when X is -CH=CHC(O)X', Y is -H or $-CH_3$;
X' is $-OSi(R^1)_3$, -R, -OR or -NR'R";
each $R^1$, independently, is H or a hydrocarbyl radical which is an aliphatic, alicyclic, aromatic or mixed aliphatic-aromatic radical containing up to 20 carbon atoms provided that at least one $R^1$ group is not H;
R is a hydrocarbyl radical which is an aliphatic, alicyclic, aromatic or mixed aliphatic-aromatic radical containing up to 20 carbon atoms, or a polymeric radical containing at least 20 carbon atoms, any of said radicals optionally containing one or more ether oxygen atoms within aliphatic segments thereof and optionally containing one or more functional substituents that are unreactive under polymerizing conditions, at least one of any R group in the monomer optionally containing one or more reactive substitutents of the formula $-Z'(O)C-C(Y^1)-CH_2$ wherein $Y^1$ is H or $CH_3$ and Z' is O or NR'; and
each of R' and R" is independently selected from $C_{1-4}$ alkyl
by contacting the one or more monomers under polymerizing conditions with:
(i) the initiator of the formula $(R^1)_3MZ$
wherein:
$R^1$ is as defined above;
Z is an activating substituent selected from the group consisting of -SR, $-OP(NR'R")_2$, $-OP(OR^1)_2$, $-OP[OSi(R^1)_3]_2$ and mixtures thereof, wherein R, $R^1$, R' and R" are as defined above; and
M is Si, Sn, or Ge, or
the initiator of the formula $(R^1)_2M(Z^1)_2$ or $O[M(R^1)_2Z^1]_2$ wherein;
$R^1$ and M are as defined above; and
$Z^1$ is an activating substituent and is

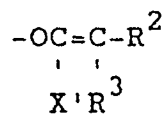

wherein:
X' is as defined above; and each of $R^2$ and $R^3$ is independently selected from H and hydrocarbyl, defined as for R above, or
the initiator of the formula $(R^1)_3MZ^4$
wherein:
$R^1$ and M are as defined above; and
$Z^4$ is an activating substituent selected from the group consisting of

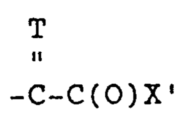, -OC(X')=C=T,

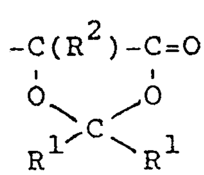 , 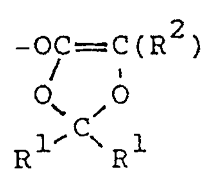

and mixtures thereof
wherein:
$R^1$, $R^2$ and X' are as defined above and T is

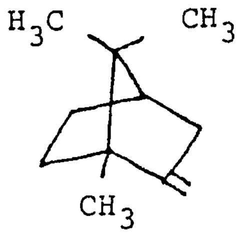

,

or the initiator of the formula $(R^1)_3MZ^5$ wherein:
$R^1$ and M are as defined above, provided, however, at least one but no more than two $R^1$ groups of $(R^1)_3MZ^5$ is H; and
$Z^5$ is an activating substituent selected from the group consisting of

-CN, 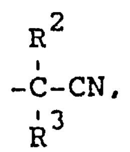, 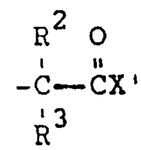,

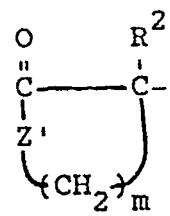, 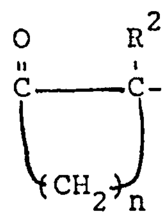,

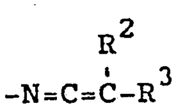, 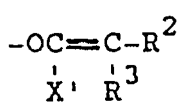, 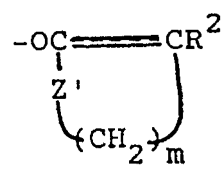,

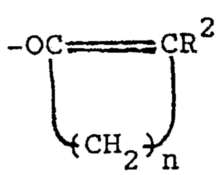

and mixtures thereof wherein:
$R^2$, $R^3$, X' and Z' are as defined above;
m is 2, 3 or 4; and
n is 3, 4 or 5,
at least one of any R, $R^2$ and $R^3$ in any initiator optionally containing one or more initiating substitutents of the formula $-Z^2-M(R^1)_3$ wherein
M and $R^1$ are as defined above; and
$Z^2$ is an activating diradical selected from the group

consisting of

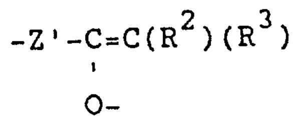, 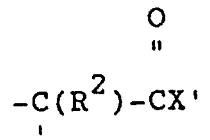, 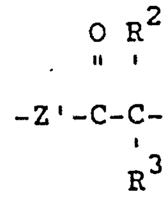,

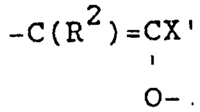, 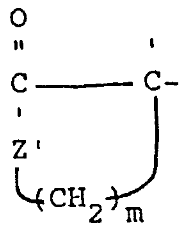, 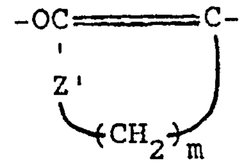

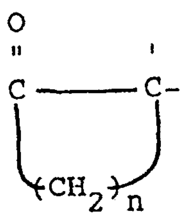, 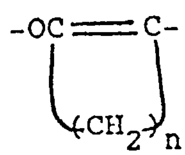, 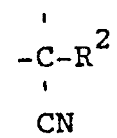,

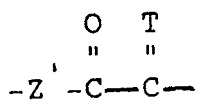, 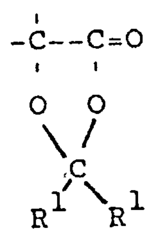

and mixtures thereof wherein:
$R^1$, $R^2$, $R^3$, T, X', Z', m and n are as defined above,
provided, however, when $Z^2$ is

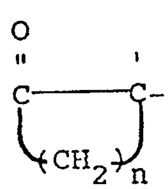,

M is Sn or Ge and, when $Z^2$ is any of the first nine groups listed above, at least one but not more than two $R^1$ groups of $Z^2$ is H; and
(ii) a co-catalyst which is a source of fluoride, cyanide or azide ions, a suitable Lewis acid, for example, zinc chloride, bromide or iodide, boron trifluoride, an alkylaluminum oxide or an alkylaluminum chloride, or a source of bifluoride ions $HF_2^{\ominus}$, to produce "living" polymer having repeat units of the one or more monomers.

**4.** Living polymer of the formula

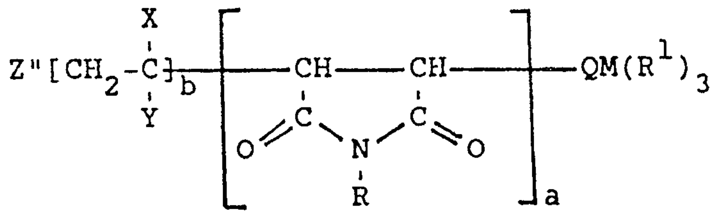

wherein:

Z" is selected from the group consisting of

-CN, 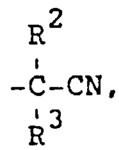, 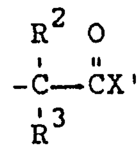,

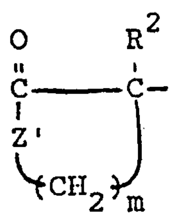, 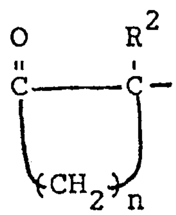,

-P(O)(NR'R")$_2$, -P(O)(OR$^1$)$_2$,
-P(O)[OSi(R$^1$)$_3$]$_2$ and -SR;

each of a and b is independently selected from 0 or a number in the range 1 to about 100,000, provided, however, (a + b) is at least 3;

Q is the divalent radical selected from the group consisting of

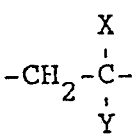, 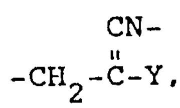, 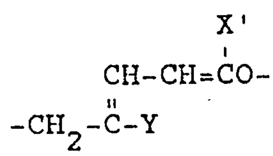, 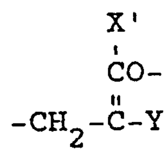,

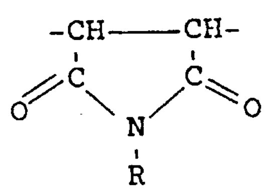, 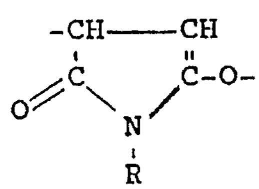

and mixtures thereof;

X is -CN, -CH=CHC(O)X' or -C(O)X';

Y is -H, -CH$_3$, -CN or -CO$_2$R, provided, however, when X is -CH=CHC(O)X', Y is -H or -CH$_3$;

X' is -OSi(R$^1$)$_3$, -R, -OR or -NR'R";

each R$^1$, independently, is H or a hydrocarbyl radical which is an aliphatic, alicyclic, aromatic or mixed aliphatic-aromatic radical containing up to 20 carbon atoms provided that at least one R$^1$ group is not H;

R is a hydrocarbyl radical which is an aliphatic, alicyclic, aromatic or mixed aliphatic-aromatic radical containing up to 20 carbon atoms, or a polymeric radical containing at least 20 carbon atoms, any of said radicals optionally containing one or more ether oxygen atoms within aliphatic segments thereof and optionally containing one or more functional substituents that are unreactive under polymerizing

conditions, at least one of any R group in the monomer optionally containing one or more reactive substitutents of the formula
$-Z'(O)C\text{-}C(Y^1)=CH_2$ wherein $Y^1$ is H or $CH_3$ and Z' is O or NR'; and
each of R' and R" is independently selected from $C_{1\text{-}4}$ alkyl; and
each of $R^2$ and $R^3$ is independently selected from H and hydrocarbyl of up to 20 carbon atoms, optionally containing one or more ether oxygen atoms within aliphatic segments thereof, and optionally containing one or more functional substituents that are unreactive under polymerizing conditions; and
m is 2, 3, or 4;
n is 3, 4 or 5; and
M is Si, Sn, or Ge, or
living polymer of the formula

(I) $R_p([Z^3\overline{P}\ QM(R^1)_2]_2(O))_p$; (II) $(R^1)_2M(Q\overline{P}\ Z")_2$; or (III) $O[M(R^1)_2Q\overline{P}\ Z"]_2$;

wherein:
$R_p$ is a hydrocarbyl radical which is aliphatic, alicyclic, aromatic or mixed aliphatic-aromatic containing up to 20 carbon atoms, or a polymeric radical containing at least 20 carbon atoms, of valence p, optionally containing one or more ether oxygen atoms, keto groups and/or functional substituents that are unreactive under polymerizing conditions;
$Z^3$ is a diradical selected from the group consisting of

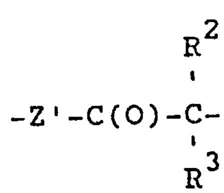 , 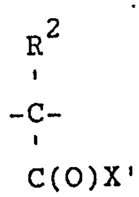 , 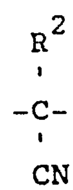 , 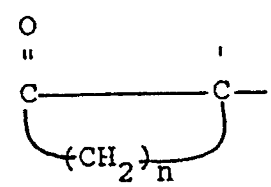 ,

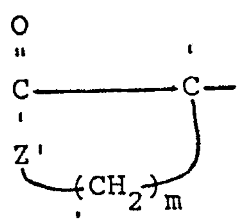

and mixtures thereof,
Z' is O or NR' wherein R' is as defined above;
each of $R^2$ and $R^3$ is independently selected from H and hydrocarbyl, defined as for R above;
X' is $-OSi(R^1)_3$, -R, -OR or -NR'R"
wherein R, $R^1$, R' and R" are as defined above;
m is 2, 3 or 4;
n is 3, 4 or 5;
$\overline{P}$ is a divalent polymeric radical of the formula

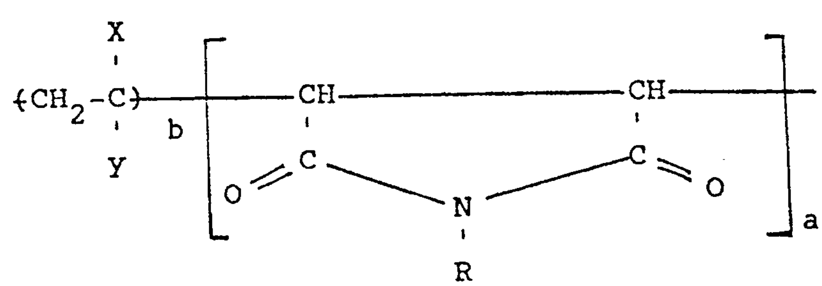

wherein X, Y, R, a and b are as defined above;
Q, M and $R^1$ are as defined above;
and

p is an integer and is at least 1, provided, however,

(i) when $Z^3$ is

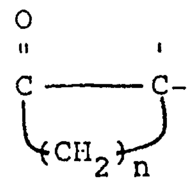 ,

M is Sn or Ge;

(ii) when $Z^3$ is

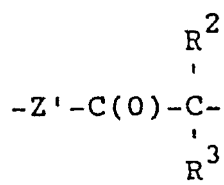 ,

$R^2$ and $R^3$ taken together are

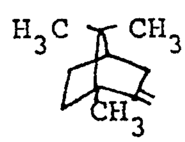 ;

(iii) when $Z^3$ is

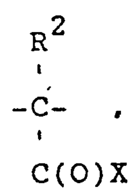 ,

$R^2$ and X' taken together are

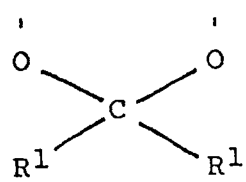 ;

and

(iv) in Formulae II and III, Z" is

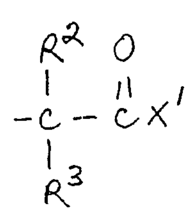

wherein $R^2$, $R^3$ and X' are as defined above.

5. Solution of the polymer of Claim 2 or Claim 4 dissolved or dispersed in an aprotic solvent.

6. Film prepared from the solution of Claim 5.

7. Fiber prepared from the solution of Claim 5.

8. Coated substrate prepared from the solution of Claim 5.

9. Polymer of Claim 2 or Claim 4 wherein the "living" ends are capped with a capping agent containing at least one functional substituent that is unreactive under capping conditions.

10. The use of the "living" polymer of Claim 2 or Claim 4 in the preparation of a block polymer.

11. A block polymer comprising a "living" polymer of Claim 2 or Claim 4 attached to another polymer of said Claims.

12. Molded article prepared from the polymer of Claim 2 or Claim 4.

13. Photosensitive article prepared from the polymer of Claim 2 or Claim 4.

14. Process comprising quenching with an active hydrogen source the "living" polymer of the formula selected from

(I) 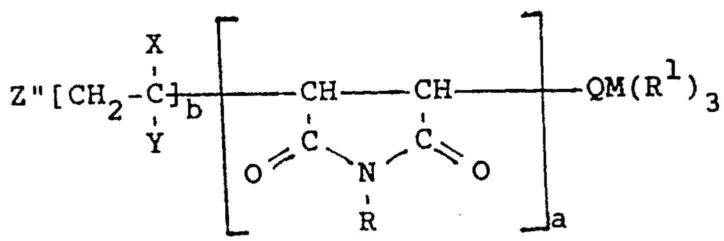 ;

(II) $R_p([Z^3\overline{P}\ QM(R^1)_2]2(O))_p$; (III) $(R^1)_2M(Q\overline{P}\ Z'')_2$ and (IV) $O[M(R^1)_2Q\overline{P}\ Z'']_2$;

wherein:
Z" is selected from the group consisting of

-CN, 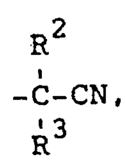, 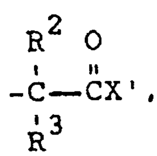, 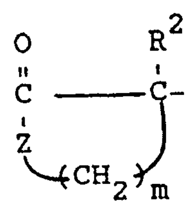, 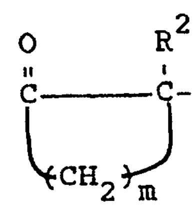

$-P(O)(NR'R'')_2$, $-P(O)(OR^1)2'$ $-P(O)[OSi(R^1)_3]_2$ and -SR;
each of a and b is independently selected from 0 or a number in the range 1 to about 100,000, provided, however, (a + b) is at least 3;
Q is the divalent radical selected from the group consisting of

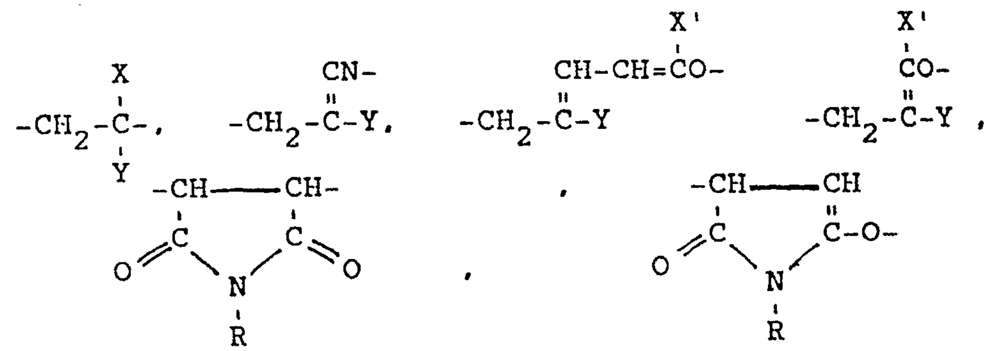

and mixtures thereof;
X is -CN, -CH = CHC(O)X' or -C(O)X';
Y is -H, $-CH_3$, -CN or $-CO_2R$,
provided, however, when X is -CH = CHC(O)X', Y is H or $-CH_3$;
X' is $OSi(R^1)_3$, -R, -OR or -NR'R";
each $R^1$, independently, is hydrocarbyl of up to 20 carbon atoms or H, provided that at least one $R^1$ group is not H;
R is hydrocarbyl of up to 20 carbon atoms, optionally containing one or more ether oxygen atoms within aliphatic segments thereof, and optionally containing one or more functional substituents that are unreactive under polymerizing conditions;
each of R' and R" is independently selected from $C_{1-4}$ alkyl;
each of $R^2$ and $R^3$ is independently selected from H and hydrocarbyl of up to 20 carbon atoms, optionally containing one or more ether oxygen atoms within aliphatic segments thereof, and optionally containing one or more functional substituents that are unreactive under polymerizing conditions;
Z' is O or NR' wherein R' is a defined above;
m is 2, 3 or 4;
n is 3, 4 or 5;
M is Si, Sn or Ge;
$R_p$ is a hydrocarbyl radical which is aliphatic, alicyclic, aromatic or aliphatic-aromatic containing up to 20 carbon atoms, or a polymeric radical containing at least 20 carbon atoms, of valence p, optionally containing one or more ether oxygen atoms, keto groups and/or functional substituents that are unreactive under polymerizing conditions;
$Z^3$ is a diradical selected from the group consisting of

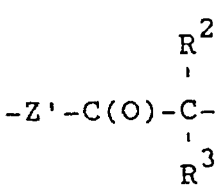 , 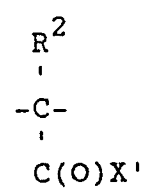 , 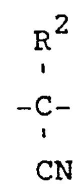 , 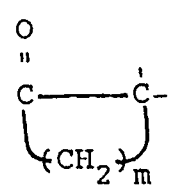 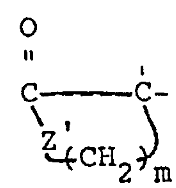

and mixtures thereof;
P is a divalent polymeric radical of the formula

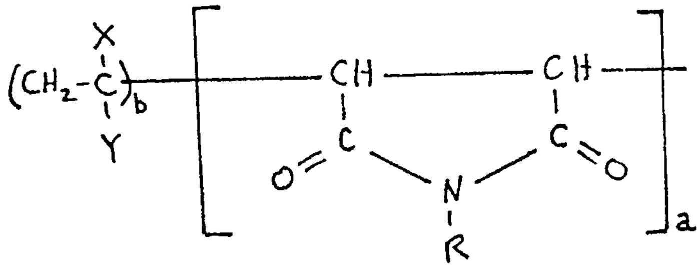

and
p is an integer and is at least 1,
provided, however,

(i) when $z^3$ is

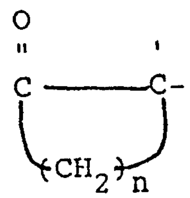
,

M is Sn or Ge;

(ii) when $Z^3$ is

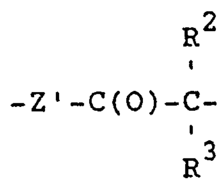
,

$R^2$ and $R^3$ taken together are

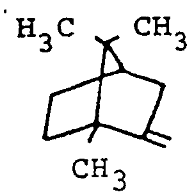
;

(iii) when $Z^3$ is

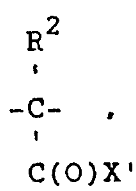
,

$R^2$ and X' taken together are

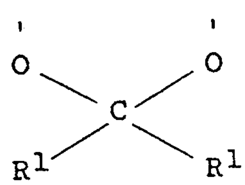
;

(iv) when in Formula (I), Z" is any of the first five groups listed above, at least one but not more than two $R^1$ groups of Z" is H; and

(v) in Formulae (III) and (IV), Z" is

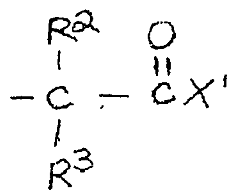

**15.** Process comprising quenching with an active hydrogen source the "living" polymer of Claim 4.

**16.** Coating composition comprising the product of the process of Claim 14 in which "living" polymer of Formula II, III, or IV is used as starting material.

**17.** Coating composition comprising the product of the process of Claim 15.

**18.** Enamel coating composition comprising cross-linkable functionality and the coating composition of Claim 16 or Claim 17.

**19.** Enamel coating composition of Claim 18 wherein the cross-linkable functionality is provided by a melamine resin.

**20.** Enamel coating composition of Claim 18 wherein the cross-linkable functionality is provided by an isocyanate resin.

**21.** Coating composition of Claim 16 or Claim 17 which is a lacquer which can be cured by solvent evaporation.

**22.** Substrate coated with the coating composition of any one of Claims 16 to 21.

**23.** Substrate coated with a plurality of layers of enamel coating composition of any one of Claims 18 to 20, the composition of at least one layer containing a pigment, and the composition of at least the outermost layer being free of pigment.

**24.** Coating composition of Claim 16 or Claim 17 in the form of a powder.

**25.** Coating composition of Claim 16 or Claim 17 suspended and/or dissolved in an aqueous medium.

**26.** Coating composition of Claim 16 or Claim 17 suspended and/or dissolved in an organic liquid medium.

**27.** Electrocoating composition in accordance with Claim 16 or Claim 17.

**28.** Coating composition which can be cured by a material in vapor form, said coating composition being in accordance with Claim 16 or Claim 17.

## Revendications

**1.** Un procédé consistant à polymériser le monomère choisi dans le groupe formé par

$CH_2=C(Y)X$, 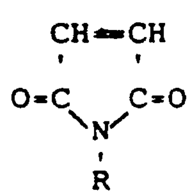

et leurs mélanges, où :
X est -CN, -CH=CHC(O)X' ou -C(O)X' ;

Y est -H, $-CH_3$, -CN ou $-CO_2R$, à condition, cependant, que si X est CH = CHC(O)X', Y soit -H ou $-CH_3$ ;
X' est $-OSi(R^1)_3$, -R, -OR ou -NR'R" ;
chaque $R^1$ , indépendamment, est un groupe hydrocarbyle ayant jusqu'à 20 atomes de carbone ;
R est un groupe hydrocarbyle ayant jusqu'à 20 atomes de carbone, contenant facultativement un ou plusieurs atomes d'oxygène d'éther dans ses segments aliphatiques, et contenant facultativement un ou plusieurs substituants fonctionnels qui ne sont pas réactifs dans les conditions de polymérisation ; et
chacun de R' et R" est indépendamment choisi parmi les groupes alkyles en $C_1$-$C_4$
par mise en contact du ou des monomères dans des conditions de polymérisation avec :

(i) l'initiateur de la formule $(R^1)_3MZ$ où :
$R^1$ est tel que défini ci-dessus ;
Z est un substituant activateur choisi dans le groupe formé par

-CN, 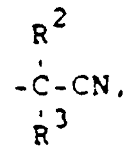, 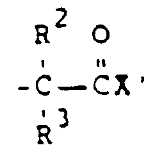,

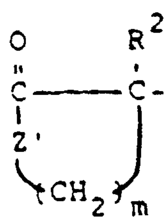, 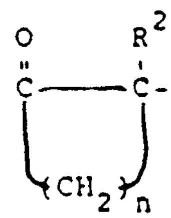,

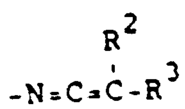, 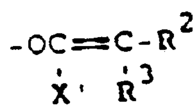, 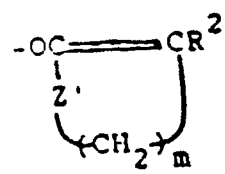,

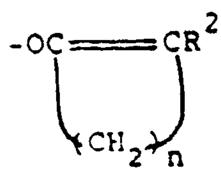

et leurs mélanges,
X' est tel que défini ci-dessus pour le monomère ;
chacun de $R^2$ et $R^3$ est indépendamment choisi parmi H et un groupe hydrocarbyle ayant jusqu'à 20 atomes de carbone, contenant facultativement un ou plusieurs atomes d'oxygène d'éther dans ses segments aliphatiques, et contenant facultativement un ou plusieurs substituants fonctionnels qui ne sont pas réactifs dans les conditions de polymérisation ; et
Z' est O ou NR' ;
m est 2, 3 ou 4 ;
n est 3, 4 ou 5 ; et
M est Si, Sn ou Ge,
à condition, cependant, que si Z est

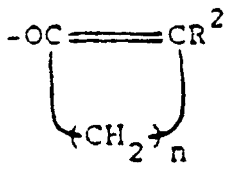 ou 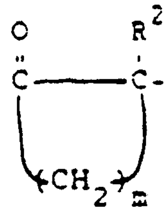 .

M soit Sn ou Ge ; et
(ii) un co-catalyseur qui est une source d'ions fluorure, cyanure, azoture ou bifluorure ou un acide de Lewis approprié,
pour produire un polymère "vivant" ayant des motifs récurrents du ou des monomères,
ledit procédé étant de plus caractérisé en ce que :
(a) $R^1$ est H, à condition qu'au moins un groupe $R^1$ ne soit pas H ; et/ou
(b) l'initiateur est de la formule $(R^1)_2M(Z^1)_2$ ou $O[M(R^1)_2Z^1]_2$ où $R^1$ et M sont tels que définis ci-dessus et $Z^1$ est un substituant activateur et est

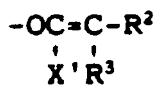

où X', $R^2$ et $R^3$ sont tels que définis ci-dessus ; et/ou
(c) Z est choisi dans le groupe formé par -SR, $-OP(NR'R")_2$, $-OP(OR^1)_2$, $-OP[OSi(R^1)_3]_2$ et leurs mélanges, où R, $R^1$, R' et R" sont tels que définis ci-dessus ; et/ou
(d) $R^2$ et $R^3$, pris ensemble, sont

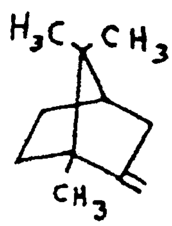

à condition, cependant, que Z soit

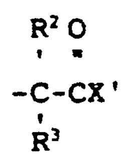 ou 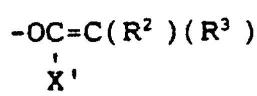

et/ou $Z^2$ est

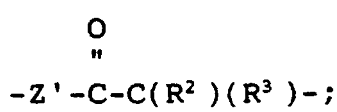

et/ou
(e) X' et $R^2$, ou X' et $R^3$, pris ensemble, sont

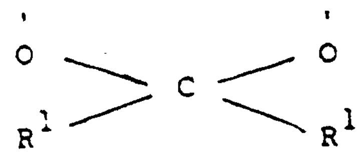

à condition, cependant, que Z soit

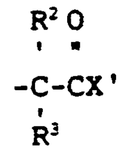 ou 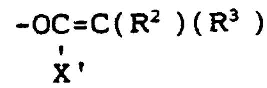

et/ou $Z^2$ est

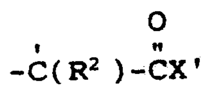.

2. Un polymère "vivant" de la formule :

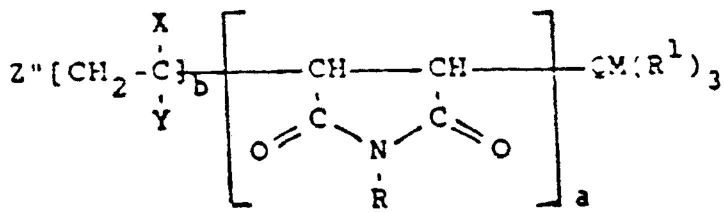

où :

Z" est choisi dans le groupe formé par

-CN, 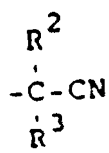, 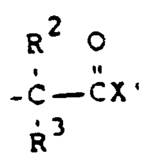, 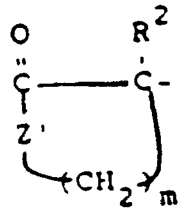 et 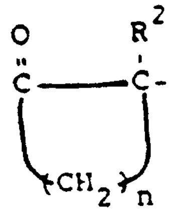 ;

chacun de a et b est indépendamment choisi parmi 0 ou un nombre compris entre 1 et environ 100 000, à condition, cependant, que (a + b) vaille au moins 3 ;

Q est le radical divalent choisi dans le groupe formé par

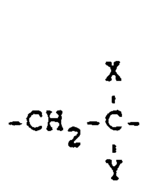 , 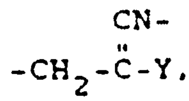 , 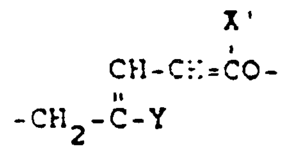 , 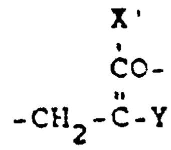

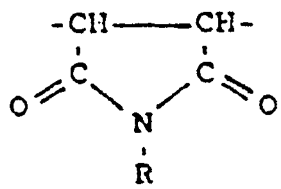 , 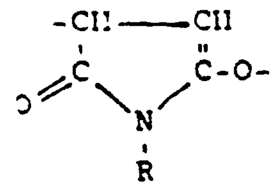

et leurs mélanges ;
X est -CN, -CH=CHC(O)X' ou -C(O)X' ;
Y est -H, $-CH_3$, -CN ou $-CO_2R$, à condition, cependant, que si X est -CH-CHC(O)X', Y soit -H ou $-CH_3$ ;
X' est $-OSi(R^1)_3$, -R, -OR ou -NR'R" ;
chaque $R^1$ est, indépendamment, un groupe hydrocarbyle ayant jusqu'à 20 atomes de carbone ;
R est un groupe hydrocarbyle ayant jusqu'à 20 atomes de carbone, contenant facultativement un ou plusieurs atomes d'oxygène d'éther dans ses segments aliphatiques, et contenant facultativement un ou plusieurs substituants fonctionnels qui ne sont pas réactifs dans les conditions de polymérisation ;
chacun de R' et R" est indépendamment choisi parmi les groupes alkyles en $C_1$-$C_4$ ;
chacun de $R^2$ et $R^3$ est indépendamment choisi parmi H et un groupe hydrocarbyle ayant jusqu'à 20 atomes de carbone, contenant facultativement un ou plusieurs atomes d'oxygène d'éther dans ses segments ailiphatiques, et contenant facultativement un ou plusieurs substituants fonctionnels qui ne sont pas réactifs dans les conditions de polymérisation ;
Z' est O ou NR' où R' est tel que défini ci-dessus ;
m est 2, 3 ou 4 ;
n est 3, 4 ou 5 ; et
M est Si, Sn ou Ge,
ledit polymère étant de plus caractérisé en ce que :

(a) $R^1$ est H, à condition qu'au moins un groupe $R^1$ ne soit pas H ; et/ou
(b) Z" est choisi parmi $-P(O)(NR'R")_2$, $-P(O)(OR^1)_2$, $-P(O)[OSi(R^1)_3]_2$ et -SR ; et/ou
(c) le polymère "vivant" est de la formule

(I) $R_p([Z^3\overline{P}\ QM(R^1)_2]_2(O))_p$ ;
(II) $(R^1)_2M(Q\overline{P}\ Z")_2$ ; ou
(III) $O[M(R^1)_2Q\overline{P}\ Z"]_2$ ; où :

$R_p$ est un radical hydrocarbyle qui est un radical aliphatique, alicyclique, aromatique ou aliphatique-aromatique contenant jusqu'à 20 atomes de carbone, ou un radical polymère contenant au moins 20 atomes de carbone, de valence p, contenant facultativement un ou plusieurs atomes d'oxygène d'éther, des groupes céto et/ou des substituants fonctionnels qui ne sont pas réactifs dans les conditions de polymérisation ;
$Z^3$ est un diradical choisi dans le groupe formé par

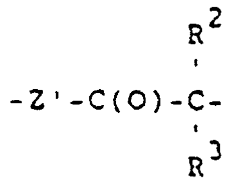 , 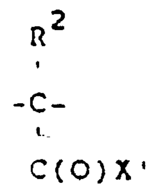 , 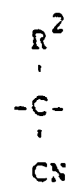 , 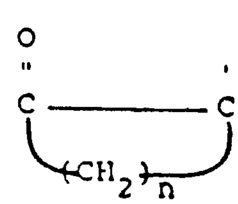 ,

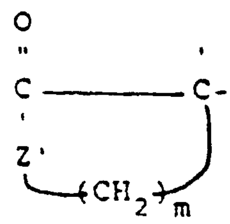

et leurs mélanges ;
Z', $R^2$, $R^3$, X', m et n sont tels que définis ci-dessus ; $\overline{P}$ est un radical polymère divalent de la formule

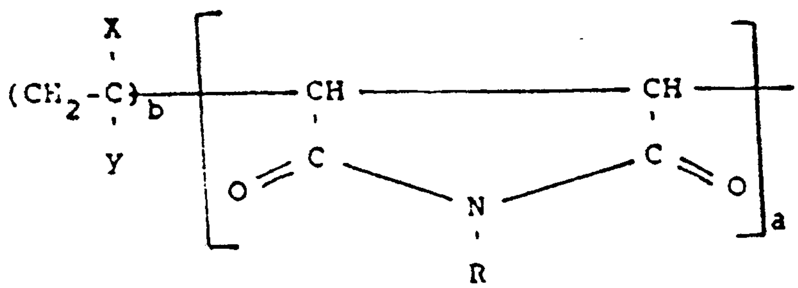

où X, Y, R, a et b sont tels que définis ci-dessus ; Q, M et $R^1$ sont tels que définis ci-dessus ; et p est un nombre entier et vaut au moins 1,
à condition, cependant, que :

(i) si $Z^3$ est

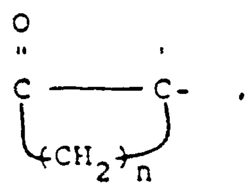

M soit Sn ou Ge ;

(ii) si $Z^3$ est

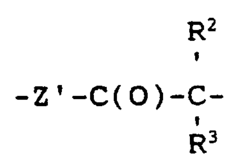

$R^2$ et $R^3$, pris ensemble, soient

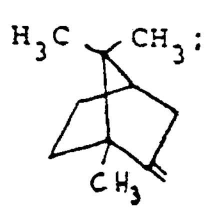

(iii) si $Z^3$ est

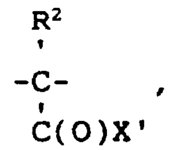

$R^2$ et X', pris ensemble, soient

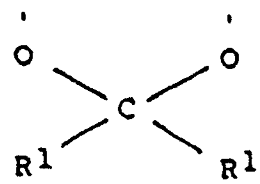

;

et

(iv) dans les Formules (II) et (III), Z" est

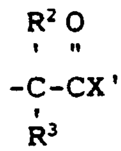

3. Procédé consistant à polymériser le monomère choisi dans le groupe formé par

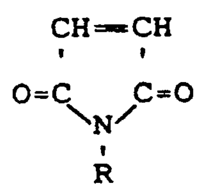

et leurs mélanges, où :

X est -CN, -CH=CHC(O)X' ou -C(O)X' ;

Y est -H, $-CH_3$, -CN ou $-CO_2R$, à condition, cependant, que si X est -CH=CHC(O)X', Y soit -H ou $-CH_3$ ;

X' est $-OSi(R^1)_3$, -R, -OR ou -NR'R" ;

chaque $R^1$, indépendamment, est H ou un radical hydrocarbyle qui est un radical aliphatique, alicyclique, aromatique ou aliphatique-aromatique mixte contenant jusqu'à 20 atomes de carbone, à condition qu'au moins un groupe $R^1$ ne soit pas H ;

R est un radical hydrocarbyle qui est un radical aliphatique, alicyclique, aromatique ou aliphatique-aromatique mixte contenant jusqu'à 20 atomes de carbone, ou un radical polymère contenant au moins 20 atomes de carbone, chacun desdits radicaux contenant facultativement un ou plusieurs atomes d'oxygène d'éther dans ses segments aliphatiques et contenant facultativement un ou plusieurs substituants fonctionnels qui ne sont pas réactifs dans les conditions de polymérisation, au moins un quelconque groupe R du monomère contenant facultativement un ou plusieurs substituants réactifs de la formule $-Z'(O)C-C(Y^1)=CH_2$ où $Y^1$ est H ou $CH_3$ et Z' est O ou NR' ; et

chacun de R' et R" est choisi indépendamment parmi les groupes alkyles en $C_1$-$C_4$

par mise en contact du ou des monomères dans des conditions de polymérisation avec :

(i) l'initiateur de la formule $(R^1)_3MZ$ où :

$R^1$ est tel que défini ci-dessus ;

Z est un substituant activateur choisi dans le groupe formé par -SR, $-OP(NR'R")_2$, $-OP(OR^1)_2$, $-OP[OSi(R^1)_3]_2$ et leurs mélanges, où R, $R^1$, R' et R" sont tels que définis ci-dessus ; et

M est Si, Sn ou Ge, ou

l'initiateur de la formule $(R^1)_2M(Z^1)_2$ ou $O[M(R^1)_2Z^1]_2$ où :

$R^1$ et M sont tels que définis ci-dessus ; et
$Z^1$ est un substituant activateur et est

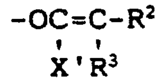

où :
X' est tel que défini ci-dessus ; et
chacun de $R^2$ et $R^3$ est choisi indépendamment parmi H et un groupe hydrocarbyle, défini comme pour R ci-dessus, ou
l'initiateur de la formule $(R^1)_3MZ^4$ où :
$R^1$ et M sont tels que définis ci-dessus ; et
$Z^4$ est un substituant activateur choisi dans le groupe formé par

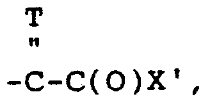 , $-OC(X')=C=T$, 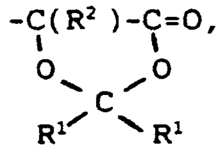 , 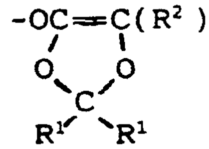

et leurs mélanges, où :
$R^1$, $R^2$ et X' sont tels que définis ci-dessus et
T est

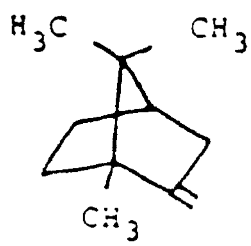

ou l'initiateur de la formule $(R^1)_3MZ^5$ où :
$R^1$ et M sont tels que définis ci-dessus, à condition, cependant, qu'au moins un mais pas plus de deux groupes $R^1$ de $(R^1)_3MZ^5$ soient H ; et
$Z^5$ est un substituant activateur choisi dans le groupe formé par

-CN, 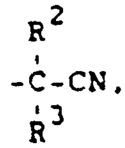 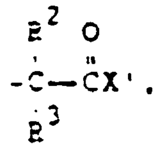

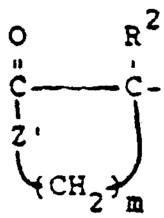 , 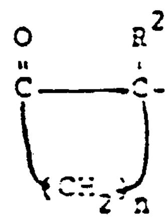 ,

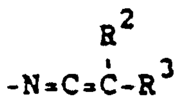 , 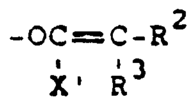 , 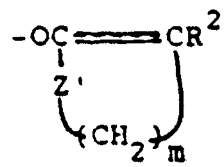 ,

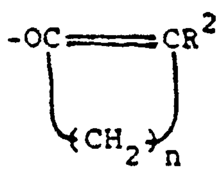

et leurs mélanges, où :

$R^2$, $R^3$, X' et Z' sont tels que définis ci-dessus ;

m est 2, 3 ou 4 ; et

n est 3, 4 ou 5,

au moins l'un quelconque de R, $R^2$ et $R^3$ de tout initiateur contenant facultativement un ou plusieurs substituants d'initiation de la formule $-Z^2-M(R^1)_3$ où

M et $R^1$ sont tels que définis ci-dessus ; et

$Z^2$ est un diradical activateur choisi dans le groupe formé par

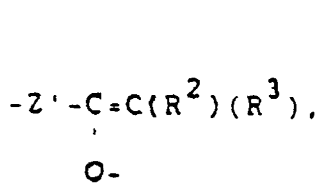, 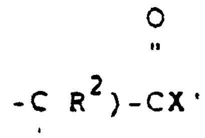, 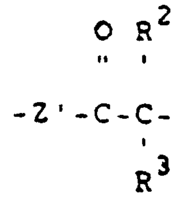,

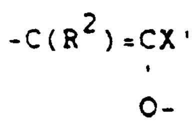, 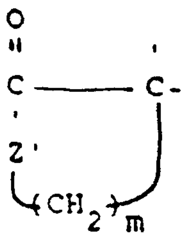, 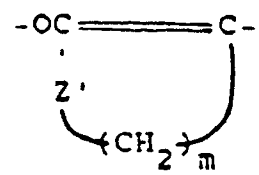,

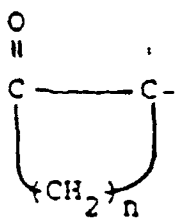, 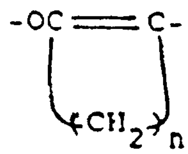, 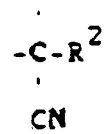,

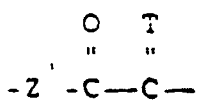, 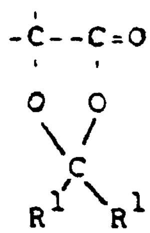

et leurs mélanges, où :
$R^1$, $R^2$, $R^3$, R, X', Z', m et n sont tels que définis ci-dessus,
à condition, cependant, que si $Z^2$ est

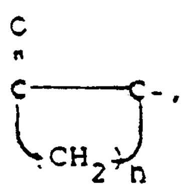

M soit Sn ou Ge, et, si $Z^2$ est l'un quelconque des neuf premiers groupes énumérés ci-dessus, au moins un mais pas plus de deux groupes $R^1$ de $Z^2$ soient H ; et
(ii) un co-catalyseur qui est une source d'ions fluorure, cyanure ou azoture, un acide de Lewis approprié, par exemple le chlorure, bromure ou iodure de zinc, le trifluorure de bore, un oxyde d'alkylaluminium ou un chlorure d'alkylaluminium, ou une source d'ions bifluorure $HF_2^{\ominus}$ , pour produire un polymère "vivant" ayant des motifs récurrents du ou des monomères.

**4.** Polymère vivant de la formule

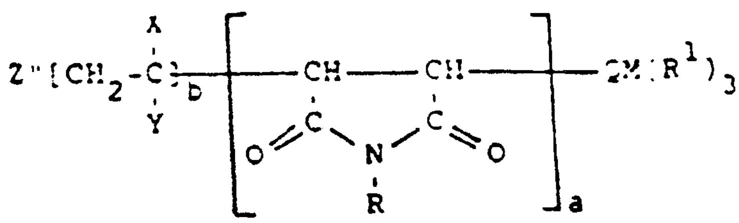

où :

Z" est choisi dans le groupe formé par

-CN, 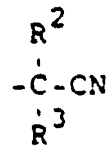 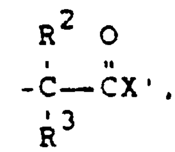

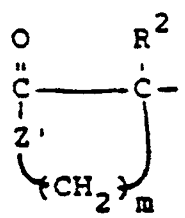 , 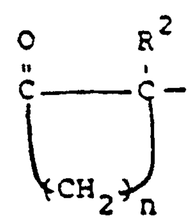 ,

-P(O)(NR'R")$_2$, -P(O)(OR$^1$)$_2$, -P(O)[OSi(R$^1$)$_3$]$_2$ et -SR ;

chacun de a et b est choisi indépendamment parmi 0 et un nombre compris entre 1 et environ 100 000, à condition, cependant, que (a + b) vaille au moins 3 ;

Q est le radical divalent choisi dans le groupe formé par

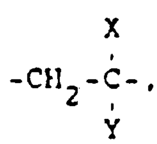 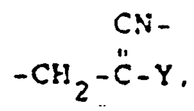 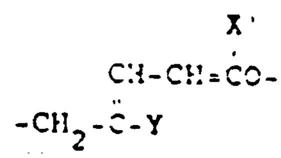 , 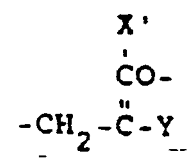

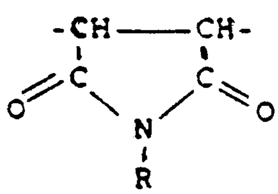 , 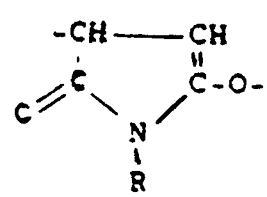

et leurs mélanges ;

X est -CN, -CH=CHC(O)X' ou -C(O)X' ;

Y est -H, -$CH_3$, -CN ou -$CO_2$R, à condition, cependant, que si X est -CH=CHC(O)X', Y soit -H ou -$CH_3$ ;

X' est -OSi(R$^1$)$_3$, -R, -OR ou -NR'R" ;

chaque R$^1$, indépendamment, est H ou un radical hydrocarbyle qui est un radical aliphatique, alicyclique, aromatique ou aliphatique-aromatique mixte contenant jusqu'à 20 atomes de carbone, à condition qu'au moins un groupe R$^1$ ne soit pas H ;

R est un radical hydrocarbyle qui est un radical aliphatique, alicyclique, aromatique ou aliphatique-aromatique mixte contenant jusqu'à 20 atomes de carbone, ou un radical polymère contenant au moins 20 atomes de carbone, chacun desdits radicaux contenant facultativement un ou plusieurs atomes d'oxygène d'éther dans ses segments aliphatiques et contenant facultativement un ou plusieurs substituants fonctionnels qui ne sont pas réactifs dans les conditions de polymérisation, au moins un quelconque groupe R du monomère contenant facultativement un ou plusieurs substituants réactifs de la formule $-Z'(O)C-C(Y^1)=CH_2$ où $Y^1$ est H ou $CH_3$ et Z' est O ou NR' ; et

chacun de R' et R" est choisi indépendamment parmi les groupes alkyles en $C_1$ -$C_4$ ; et

chacun de $R^2$ et $R^3$ est choisi indépendamment parmi H et un groupe hydrocarbyle ayant jusqu'à 20 atomes de carbone, contenant facultativement un ou plusieurs atomes d'oxygène d'éther dans ses segments aliphatiques, et contenant facultativement un ou plusieurs substituants fonctionnels qui ne sont pas réactifs dans les conditions de polymérisation ; et

m est 2, 3 ou 4 ;

n est 3, 4 ou 5 ; et

M est Si, Sn ou Ge, ou

polymère vivant de la formule

(I) $R_p([Z^3\overline{P}\ QM(R^1)_2]_2(O))_p$ ;

(II) $(R^1)_2M(Q\overline{P}\ Z")_2$ ; ou

(III) $O[M(R^1)_2Q\overline{P}\ Z"]_2$ ; où :

$R_p$ est un radical hydrocarbyle qui est un radical aliphatique, alicyclique, aromatique ou aliphatique-aromatique mixte contenant jusqu'à 20 atomes de carbone, ou un radical polymère contenant au moins 20 atomes de carbone, de valence p, contenant facultativement un ou plusieurs atomes d'oxygène d'éther, des groupes céto et/ou des substituants fonctionnels qui ne sont pas réactifs dans les conditions de polymérisation ;

$Z^3$ est un diradical choisi dans le groupe formé par

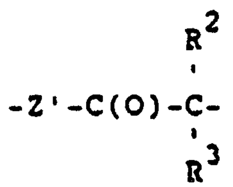 , 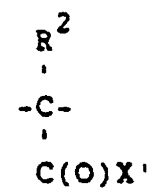 , 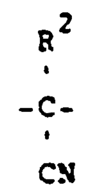 , 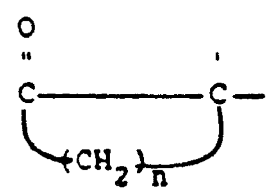 ,

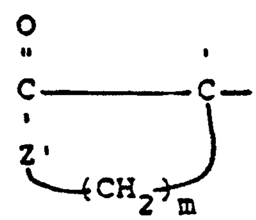

et leurs mélanges ;

Z' est O ou NR' où R' est tel que défini ci-dessus ;

chacun de $R^2$ et $R^3$ est choisi indépendamment parmi H et un groupe hydrocarbyle, défini comme pour R ci-dessus ;

X' est $-OSi(R^1)_3$, -R, -OR ou -NR'R" où R, $R^1$, R' et R" sont tels que définis ci-dessus ;

m est 2, 3 ou 4 ;

n est 3, 4 ou 5 ;

$\overline{P}$ est un radical polymère divalent de la formule

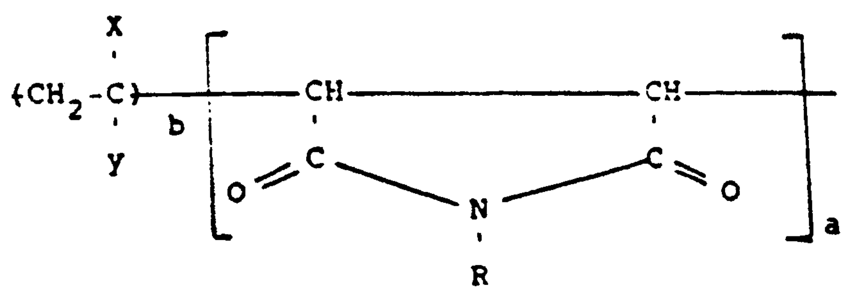

où X, Y, R, a et b sont tels que définis ci-dessus ; Q, M et $R^1$ sont tels que définis ci-dessus ; et p est un nombre entier et vaut au moins 1, à condition, cependant, que

(i) si $Z^3$ est

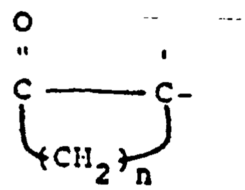

,

M soit Sn ou Ge ;

(ii) si $Z^3$ est

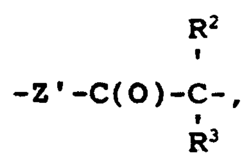

$R^2$ et $R^3$, pris ensemble, soient

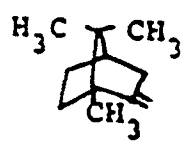

(iii) si $Z^3$ est

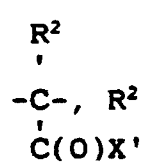

, $R^2$ et X', pris ensemble, soient

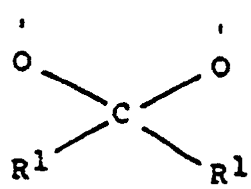

;

et

(iv) dans les Formules II et III, Z" soit

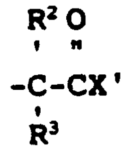

où $R^2$, $R^3$ et X' sont tels que définis ci-dessus.

5. Solution du polymère de la revendication 2 ou de la revendication 4 dissous ou dispersé dans un solvant aprotique.

6. Pellicule préparée à partir de la solution de la revendication 5.

7. Fibre préparée à partir de la solution de la revendication 5.

8. Substrat revêtu préparé à partir de la solution de la revendication 5.

9. Polymère de la revendication 2 ou de la revendication 4, dans lequel les extrémités "vivantes" sont bloquées par un agent de blocage contenant au moins un substituant fonctionnel qui n'est pas réactif dans les conditions de blocage.

10. L'utilisation du polymère "vivant" de la revendication 2 ou de la revendication 4 dans la préparation d'un polymère séquencé.

11. Un polymère séquencé comprenant un polymère "vivant" de la revendication 2 ou de la revendication 4 attaché à un autre polymère desdites revendications.

12. Article moulé préparé à partir du polymère de la revendication 2 ou de la revendication 4.

13. Article photosensible préparé à partir du polymère de la revendication 2 ou de la revendication 4.

14. Procédé consistant à désactiver par une source d'hydrogène actif le polymère "vivant" de la formule choisie parmi

(I) 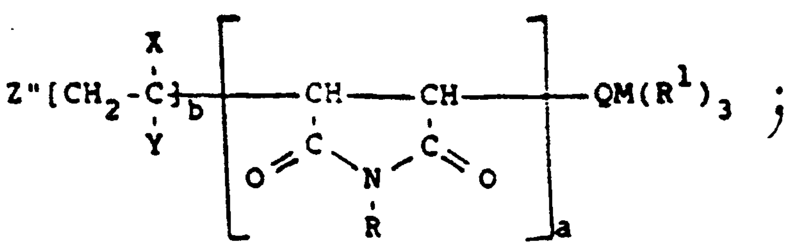 ;

(II) $R_p([Z^3\overline{P}\ QM(R^1)_2]_2(O))_p$ ;

(III) $(R^1)_2M(Q\overline{P}\ Z")_2$ et

(IV) $O[M(R^1)_2Q\overline{P}\ Z"]_2$ ; où:

Z" est choisi dans le groupe formé par

-CN, 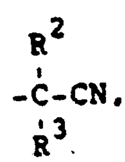, 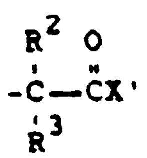, 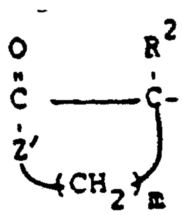, 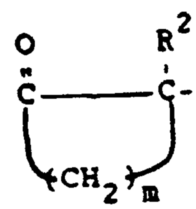

-P(O)(NR'R")$_2$, -P(O)(OR$^1$)$_2$, -P(O)[OSi(R$^1$)$_3$]$_2$ et -SR ;
chacun de a et b est indépendamment choisi entre 0 et un nombre compris dans l'intervalle de 1 à environ 100 000, à condition cependant que (a + b) vaille au moins 3 ;
Q est le radical divalent choisi dans le groupe formé par

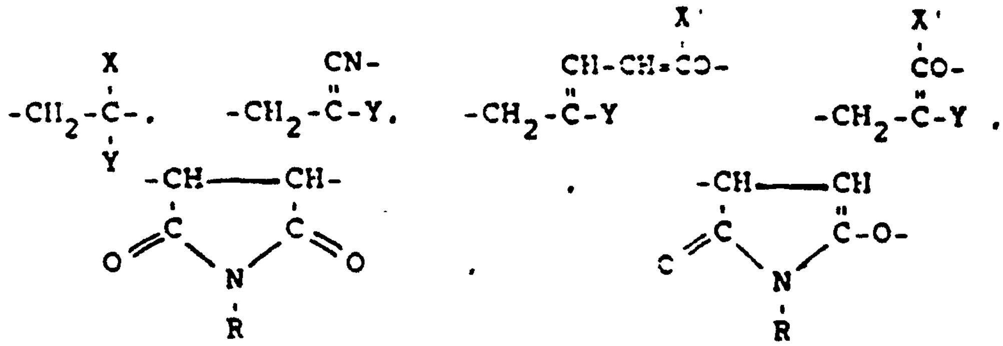

et leurs mélanges ;
X est -CN, -CH=CHC(O)X' ou -C(O)X' ;
Y est -H, -CH$_3$, -CN ou -CO$_2$R, à condition, cependant, que si X est -CH-CHC(O)X', Y soit H ou -CH$_3$ ;
X' est -OSi(R$^1$)$_3$, -R, -OR ou -NR'R" ;
chaque R$^1$ est, indépendamment, un groupe hydrocarbyle ayant jusqu'à 20 atomes de carbone ou H, à condition qu'un moins un groupe R$^1$ ne soit pas H ;
R est un groupe hydrocarbyle ayant jusqu'à 20 atomes de carbone, contenant facultativement un ou plusieurs atomes d'oxygène d'éther dans ses segments aliphatiques, et contenant facultativement un ou plusieurs substituants fonctionnels qui ne sont pas réactifs dans les conditions de polymérisation ;
chacun de R' et R" est indépendamment choisi parmi les groupes alkyles en C$_1$-C$_4$ ;
chacun de R$^2$ et R$^3$ est indépendamment choisi parmi H et un groupe hydrocarbyle ayant jusqu'à 20 atomes de carbone, contenant facultativement un ou plusieurs atomes d'oxygène d'éther dans ses segments aliphatiques, et contenant facultativement un ou plusieurs substituants fonctionnels qui ne sont pas réactifs dans les conditions de polymérisation ;
Z' est O ou NR' où R' est tel que défini ci-dessus ;
m est 2, 3 ou 4 ;
n est 3, 4 ou 5 ;
M est Si, Sn ou Ge,
R$_p$ est un radical hydrocarbyle qui est un radical aliphatique, alicyclique, aromatique ou aliphatique-aromatique contenant jusqu'à 20 atomes de carbone, ou un radical polymère contenant au moins 20 atomes de carbone, de valence p, contenant facultativement un ou plusieurs atomes d'oxygène d'éther, des groupes céto et/ou des substituants fonctionnels qui ne sont pas réactifs dans les conditions de polymérisation ;
Z$^3$ est un diradical choisi dans le groupe formé par

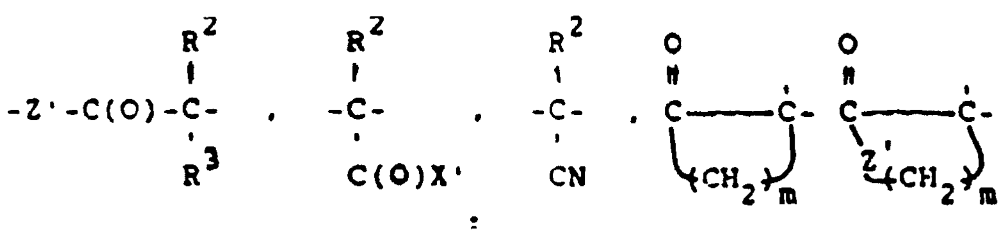

et leurs mélanges ;
$\overline{P}$ est un radical polymère divalent de la formule

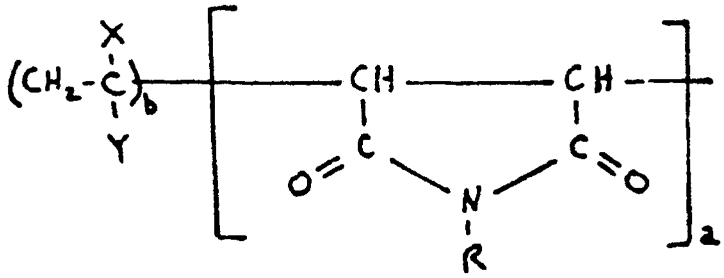

et

p est un nombre entier et vaut au moins 1, à condition, cependant, que

(i) si $Z^3$ est

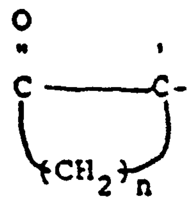 ,

M soit Sn ou Ge ;

(ii) si $Z^3$ est

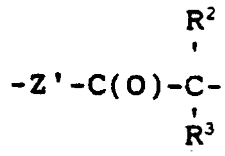

$R^2$ et $R^3$ pris ensemble soient

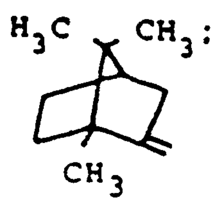

(iii) si $Z^3$ est

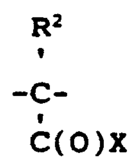 ,

$R^2$ et X' pris ensemble soient

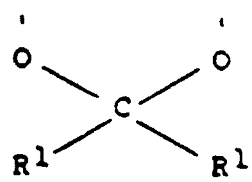

(iv) si, dans la Formule (I), Z" est l'un quelconque des cinq premiers groupes énumérés ci-dessus, au moins un mais pas plus de deux groupes $R^1$ de Z" soient H ; et
(v) dans les Formules (III) et (IV), Z" soit

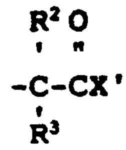

**15.** Procédé consistant à désactiver par une source d'hydrogène actif le polymère "vivant" de la revendication 4.

**16.** Composition de revêtement comprenant le produit du procédé de la revendication 14 dans lequel le polymère "vivant" de Formule II, III ou IV est utilisé comme matière de départ.

**17.** Composition de revêtement comprenant le produit du procédé de la revendication 15.

**18.** Composition de revêtement-émail comprenant une fonctionnalité réticulable et la composition de revêtement de la revendication 16 ou de la revendication 17.

**19.** Composition de revêtement-émail de la revendication 18, dans laquelle la fonctionnalité réticulable est fournie par une résine de mélamine.

**20.** Composition de revêtement-émail de la revendication 18, dans laquelle la fonctionnalité réticulable est fournie par une résine d'isocyanate.

**21.** Composition de revêtement de la revendication 16 ou de la revendication 17, qui est un vernis pouvant être durci par évaporation de solvant.

**22.** Substrat revêtu par la composition de revêtement de l'une quelconque des revendications 16 à 21.

**23.** Substrat revêtu par plusieurs couches de composition de revêtement-émail de l'une quelconque des revendications 18 à 20, la composition d'au moins une couche contenant un pigment, et la composition de la couche externe au moins étant exempte de pigment.

**24.** Composition de revêtement de la revendication 16 ou de la revendication 17, sous la forme d'une poudre.

**25.** Composition de revêtement de la revendication 16 ou de la revendication 17, en suspension et/ou dissoute dans un milieu aqueux.

**26.** Composition de revêtement de la revendication 16 ou de la revendication 17, en suspension et/ou dissoute dans un milieu liquide organique.

**27.** Composition pour électrophorèse selon la revendication 16 ou la revendication 17.

**28.** Composition de revêtement qui peut être durcie par une substance sous forme de vapeur, ladite composition de revêtement étant selon la revendication 16 ou la revendication 17.

## Ansprüche

**1.** Verfahren umfassend das Polymerisieren des aus der aus

$CH_2=C(Y)X$, 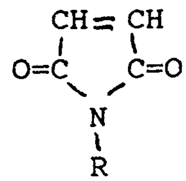

und deren Gemischen bestehenden Gruppe ausgewählten Monomers,
worin
X -CN, -CH = CHC(O)X' oder -C(O)X' ist;
Y -H, $-CH_3$, -CN oder $-CO_2R$ ist, vorausgesetzt jedoch daß, wenn X CH = CHC(O)X' ist, Y -H oder $-CH_3$ ist;
X' $-OSi(R^1)_3$, -R, -OR oder -NR'R" ist;
$R^1$ jeweils unabhängig voneinander ein Kohlenwasserstoff-Rest mit bis zu 20 Kohlenstoff-Atomen ist;
R ein Kohlenwasserstoff-Rest mit bis zu 20 Kohlenstoff-Atomen ist, welcher gegebenenfalls einen oder mehrere Ether-Sauerstoff-Atome innerhalb seiner aliphatischen Segmente enthält und welcher gegebenenfalls einen oder mehrere funktionelle Substituenten enthält, die unter Polymerisierungsbedingungen nicht reaktionsfähig sind; und
R' und R" jeweils unabhängig voneinander aus $C_{1-4}$ Alkyl ausgewählt sind,
durch In-Kontakt-Bringen des einen oder mehrerer Monomerer unter Polymerisierungsbedingungen mit

(i) dem Initiator der Formel $(R^1)_3MZ$,
worin
$R^1$ die im Vorstehenden angegebene Bedeutung hat;
Z ein aus der aus

-CN, 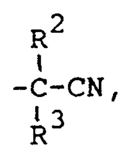, 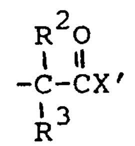,

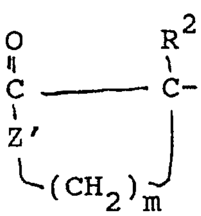, 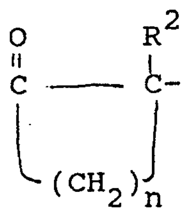,

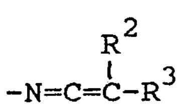, 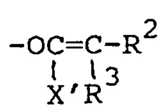, 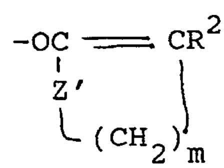,

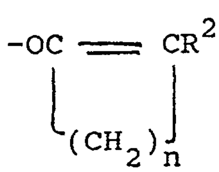

und deren Gemischen bestehenden Gruppe ausgewählter aktivierender Substituent ist,
X' die im Vorstehenden für das Monomer angegebene Bedeutung hat;

$R^2$ und $R^3$ jeweils unabhängig voneinander aus H und einem Kohlenwasserstoff-Rest von bis zu 20 Kohlenstoff-Atomen ausgewählt sind, welcher gegebenenfalls einen oder mehrere Ether-Sauerstoff-Atome innerhalb seiner aliphatischen Segmente enthält und welcher gegebenenfalls einen oder mehrere funktionelle Substituenten enthält, die unter Polymerisierungsbedingungen nicht reaktionsfähig sind, und
Z' O oder NR' ist;
m 2, 3 oder 4 ist;
n 3, 4 oder 5 ist; und
M Si, Sn oder Ge ist,
vorausgesetzt jedoch, daß, wenn Z

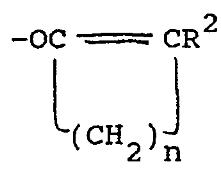

oder

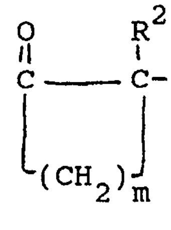

ist,
M Sn oder Ge ist; und
(ii) einem Co-Katalysator, der eine Quelle für Fluorid-, Cyanid-, Azid- oder Bifluorid-Ionen oder eine geeignete Lewis-Säure ist,
wodurch ein "lebendes" Polymer mit Wiederholungseinheiten aus dem einen oder mehreren Monomeren gebildet wird, wobei das Verfahren weiter dadurch gekennzeichnet ist, daß
(a) $R^1$ H ist, vorausgesetzt, daß wenigstens eine $R^1$ Gruppe nicht H ist; und/oder
(b) der Initiator die Formel $(R^1)_2M(Z^1)_2$ oder $O[M(R^1)_2Z^1]_2$ hat,
worin
$R^1$ und M die im Vorstehenden angegebene Bedeutung haben und $Z^1$ ein aktivierender Substituent ist und

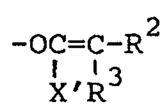

ist, worin X', $R^2$ und $R^3$ die im Vorstehenden angegebene Bedeutung haben; und/oder
(c) Z aus der aus -SR, $-OP(NR'R'')_2$, $-OP(OR^1)_2$, $-OP[OSi(R^1)_3]_2$ und deren Gemischen bestehenden Gruppe ausgewählt ist, worin R, $R^1$, R' und R'' die im Vorstehenden angegebene Bedeutung haben; und/oder
(d) $R^2$ und $R^3$ zusammengenommen

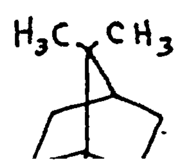

sind, vorausgesetzt daß Z

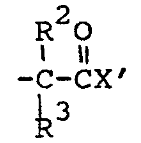

oder

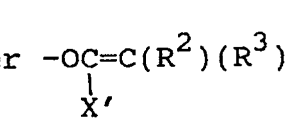

ist, und/oder $Z^2$

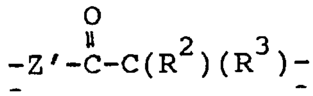

ist; und/oder

(e) entweder X' und $R^2$ oder X' und $R^3$ zusammengenommen

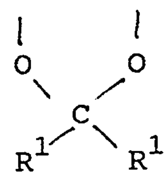

sind, vorausgesetzt jedoch, daß

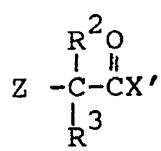

oder

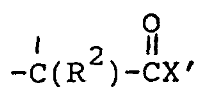

ist under/oder Z

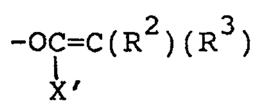

$^2$ ist.

2. "Lebendes Polymer" der Formel

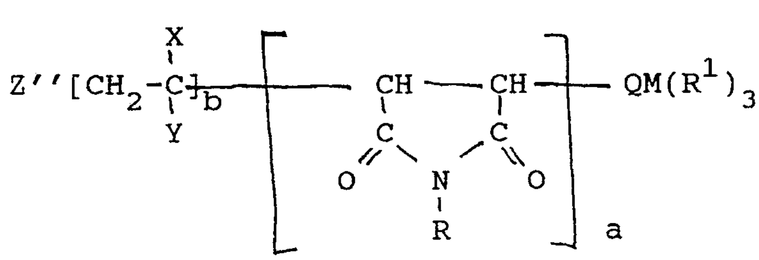

worin

Z'' aus der aus

-CN, 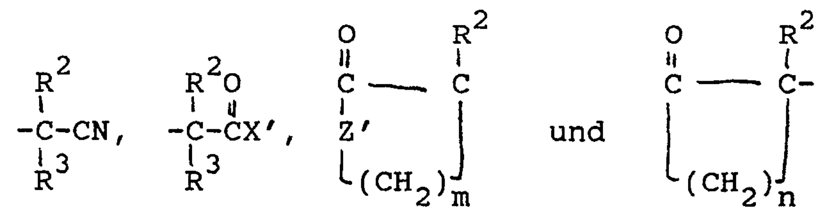 und

bestehenden Gruppe ausgewählt ist;
a und b jeweils unabhängig voneinander aus 0 oder einer Zahl im Bereich von 1 bis etwa 100 000 ausgewählt sind, vorausgesetzt jedoch, daß (a + b) wenigstens 3 ist;
Q der aus der aus

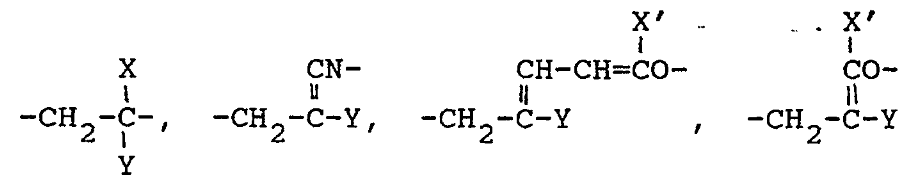

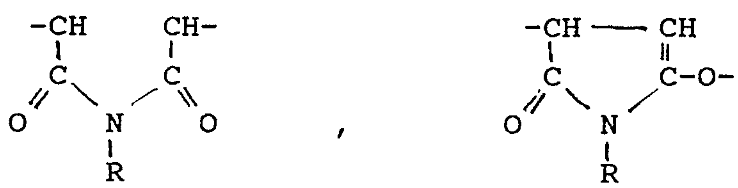

und deren Gemischen bestehenden Gruppe ausgewählte zweiwertige Rest ist;
X -CN, -CH = CHC(O)X' oder -C(O)X' ist;
Y -H, $-CH_3$, -CN oder $-CO_2R$ ist, vorausgesetzt jedoch, daß, wenn X -CH = CHC(O)X' ist, Y -H oder $-CH_3$ ist;
X' $-OSi(R^1)_3$' -R, -OR oder -NR'R" ist;
$R^1$ jeweils unabhängig voneinander ein Kohlenwasserstoff-Rest mit bis zu 20 Kohlenstoff-Atomen ist;
R ein Kohlenwasserstoff-Rest mit bis zu 20 Kohlenstoff-Atomen ist, welcher gegebenenfalls einen oder mehrere Ether-Sauerstoff-Atome innerhalb seiner aliphatischen Segmente enthält und der gegebenenfalls einen oder mehrere funktionelle Substituenten enthält, welche unter Polymerisierungsbedingungen nicht reaktionsfähig sind;
R' und R" jeweils unabhängig voneinander aus $C_{1-4}$ Alkyl ausgewählt sind;
$R^2$ und $R^3$ jeweils unabhängig voneinander aus H und einem Kohlenwasserstoff-Rest von bis zu 20 Kohlenstoff-Atomen ausgewählt sind, welcher gegebenenfalls einen oder mehrere Ether-Sauerstoff-Atome innerhalb seiner aliphatischen Segmente enthält und der gegebenenfalls einen oder mehrere funktionelle Substituenten enthält, welche unter Polymerisierungsbedingungen nicht reaktionsfähig sind; und
Z' O oder NR' ist, worin R' die im Vorstehenden angegebene Bedeutung hat;
m 2, 3 oder 4 ist;
n 3, 4 oder 5 ist; und
M Si, Sn oder Ge ist,
wobei das Polymer dadurch weiter gekennzeichnet ist, daß

(a) $R^1$ H ist, vorausgesetzt, daß wenigstens eine $R^1$-Gruppe nicht H ist; und/oder
(b) Z" aus $-P(O)(NR'R'')_2$, $-P(O)(OR^1)_2$, $-P(O)[OSi(R^1)_3]_2$ und
-SR ausgewählt ist; und/oder
(c) das "lebende" Polymer die Formel (I)
$R_p([Z^3\overline{P}\ QM(R^1)_2]_2(O))_p$; (II) $(R^1)_2M(QPZ'')_2$; oder
(III) $O[M(R^1)_2Q\overline{P}\ Z'']_2$ hat; worin $R_p$ ein Kohlenwasserstoff-Rest ist, welcher aliphatisch, alicyclisch, aromatisch oder aliphatisch-aromatisch ist und bis zu 20 Kohlenstoff-Atome enthält, oder ein wenigstens 20 Kohlenstoff-Atome enthaltender polymerer Rest mit der Wertigkeit p, welcher gegebenenfalls ein oder mehrere Ether-Sauerstoff-Atome, Ketogruppen und/oder funktionelle Substituenten, welche unter Polymerisierungsbedingungen nicht reaktionsfähig sind, enthält; $Z^3$ ein aus der aus

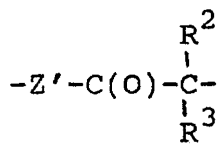 , 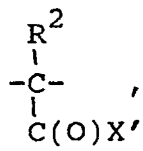 , 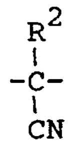 , 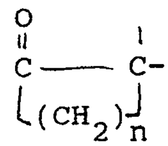 ,

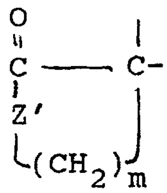

und deren Gemischen bestehenden Gruppe ausgewähltes Diradikal ist;
Z', $R^2$, $R^3$, X', m und n die im Vorstehenden angegebene Bedeutung haben;
$\overline{P}$ ein zweiwertiger polymerer Rest der Formel

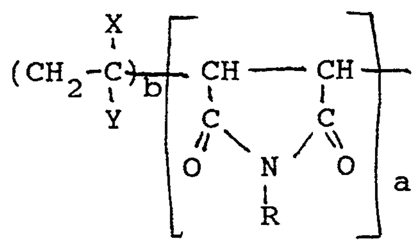

ist, worin
X, Y, R, a und b die im Vorstehenden angegebene Bedeutung haben;
Q, M und $R^1$ die im Vorstehenden angegebene Bedeutung haben; und
p eine ganze Zahl und wenigstens 1 ist, vorausgesetzt jedoch, daß,
(i) wenn $Z^3$

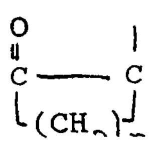

ist, M Sn oder Ge ist;
(ii) wenn $Z^3$

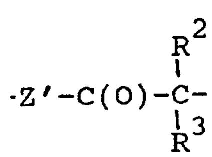

ist, $R^2$ und $R^3$ zusammengenommen

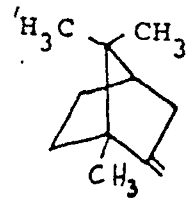

sind;

(iii) wenn $Z^3$

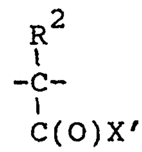

ist, $R^2$ und X' zusammengenommen

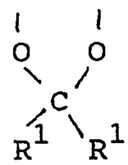

sind; und

(iv) in den Formeln (II) und (III) Z"

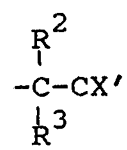

ist.

3. Verfahren umfassend das Polymerisieren des aus der aus

$CH_2=C(Y)X$ , 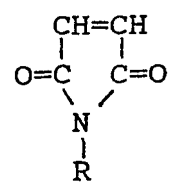

und deren Gemischen bestehenden Gruppe ausgewählten Monomers, worin

X -CN, -CH=CHC(O)X' oder -C(O)X' ist;

Y -H, $-CH_3$, -CN oder $-CO_2R$ ist, vorausgesetzt jedoch, daß, wenn X -CH=CHC(O)X' ist, Y -H oder $-CH_3$ ist;

X' $-OSi(R^1)_3$, -R, -OR oder -NR'R" ist;

$R^1$ jeweils unabhängig voneinander H oder ein Kohlenwasserstoff-Rest ist, welcher ein aliphatischer, alicyclischer, aromatischer oder gemischt-aliphatisch-aromatischer Rest ist, der bis zu 20 Kohlenstoff-Atome enthält, vorausgesetzt, daß wenigstens eine $R^1$-Gruppe nicht H ist;

R ein Kohlenwasserstoff-Rest ist, welcher ein aliphatischer, alicyclischer, aromatischer oder gemischt-aliphatisch-aromatischer Rest ist und bis zu 20 Kohlenstoff-Atome enthält, oder ein wenigstens 20 Kohlenstoff-Atome enthaltender polymerer Rest, wobei jeder dieser Reste gegebenenfalls ein oder

mehrere Ether-Sauerstoff-Atome innerhalb seiner aliphatischen Segmente enthält und gegebenenfalls einen oder mehrere funktionelle Substituenten enthält, die unter den Polymerisierungsbedingungen nicht reaktionsfähig sind, wobei wenigstens irgendeine R-Gruppe in dem Monomeren gegebenenfalls einen oder mehrere reaktionsfähige Substituenten der Formel $-Z'(O)C-C(Y^1)=CH_2$ enthält, worin $Y^1$ H oder $CH_3$ ist und Z' O oder NR' ist; und
R' und R'' jeweils unabhängig voneinander aus $C_{1-4}$ Alkyl ausgewählt sind,
durch In-Berührung-Bringen des einen oder mehrerer Monomerer unter Polymerisierungsbedingungen mit

(i) dem Initiator der Formel $(R^1)_3MZ$, worin
$R^1$ die im Vorstehenden angegebene Bedeutung hat;
Z ein aktivierender Substituent ist, welcher aus der aus -SR, $-OP(NR'R'')_2$, $-OP(OR^1)_2$, $-OP[OSi(R^1)_3]_2$, worin R, $R^1$ R' und R'' die im Vorstehenden angegebene Bedeutung haben, und deren Gemischen bestehenden Gruppe ausgewählt ist; und
M Si, Sn oder Ge ist, oder
dem Initiator der Formel $(R^1)_2M(Z^1)_2$ oder $O[M(R^1)_2Z^1]_2$,
worin
$R^1$ und M die im Vorstehenden angegebene Bedeutung haben;
und
$Z^1$ ein aktivierender Substituent ist und

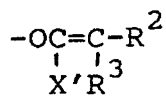

ist,
worin
X' die im Vorstehenden angegebene Bedeutung hat; und
$R^2$ und $R^3$ jeweils unabhängig voneinander aus H und einem Kohlenwasserstoff-Rest, der die im Vorstehenden für R angegebene Bedeutung hat, ausgewählt sind, oder
dem Initiator der Formel $(R^1)_3MZ^4$,
worin
$R^1$ und M die im Vorstehenden angegebene Bedeutung haben,
und
$Z^4$ ein aus der aus

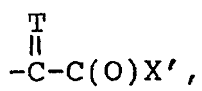, $-OC(X')=C=T$,

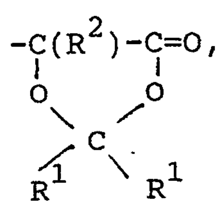 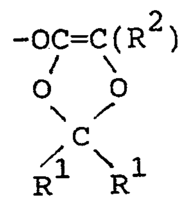

und deren Gemischen bestehenden Gruppe ausgewählter aktivierender Substituent ist,
worin
$R^1$, $R^2$ und X' die im Vorstehenden angegebene Bedeutung haben und T

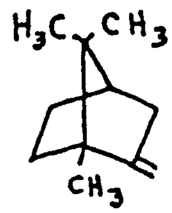

ist,
oder dem Initiator der Formel $(R^1)_3MZ^5$, worin
$R^1$ und M die im Vorstehenden angegebene Bedeutung haben, vorausgesetzt jedoch, daß wenigstens eine aber nicht mehr als zwei $R^1$-Gruppen in $(R^1)_3MZ^5$ H sind; und
$Z^5$ ein aus der aus

-CN, 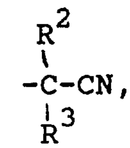 , 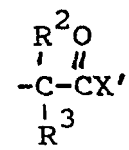 ,

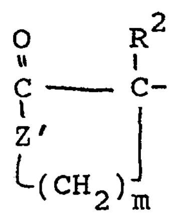 , 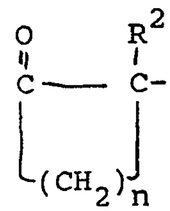 ,

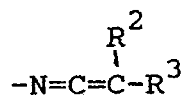 , 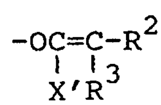 , 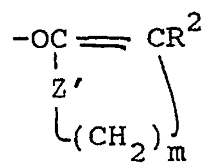 ,

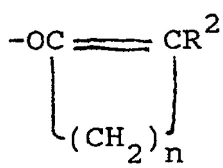

und deren Gemischen bestehenden Gruppe ausgewählter aktivierender Substituent ist,
worin
$R^2$, $R^3$, $X^1$ und Z' die im Vorstehenden angegebene Bedeutung haben;
m 2, 3 oder 4 ist; und
n 3, 4 oder 5 ist;
wenigstens einer aus R, $R^2$ und $R^3$ in einem Initiator gegebenenfalls einen oder mehrere initiierende Substituenten der Formel $-Z^2-M(R^1)_3$ enthält, worin
M und $R^1$ die im Vorstehenden angegebene Bedeutung haben,
und
$Z^2$ ein aus der aus

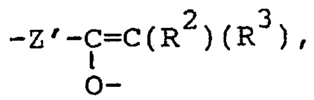 , 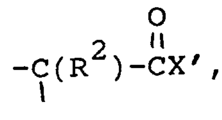 , 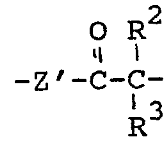 ,

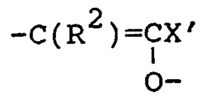 , 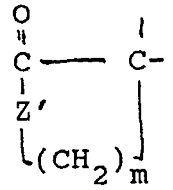 , 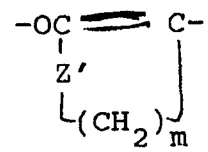 ,

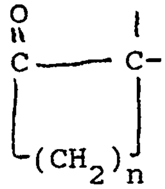 , 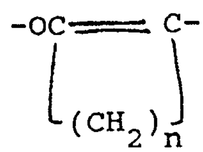 , 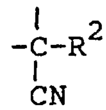 ,

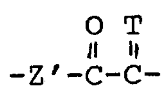 , 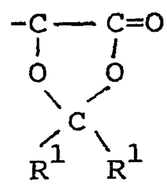

und deren Gemischen bestehenden Gruppe ausgewähltes aktivierendes Diradikal ist, worin $R^1$, $R^2$ $R^3$, T, X', Z', m und n die im Vorstehenden angegebene Bedeutung haben, vorausgesetzt jedoch, daß, wenn $Z^2$

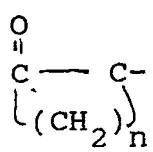

ist, M Sn oder Ge ist, und wenn $Z^2$ irgendeine der ersten neun voranstehend aufgeführten Gruppen ist, wenigstens eine aber nicht mehr als zwei $R^1$-Gruppen in $Z^2$ H sind; und
(ii) einem Co-Katalysator, welcher eine Quelle für Fluorid-, Cyanid- oder Azidionen ist, einer geeigneten Lewissäure, zum Beispiel Zinkchlorid, -bromid oder -iodid, Bortrifluorid, einem Alkylaluminiumoxid oder einem Alkylaluminiumchlorid oder einer Quelle für Bifluoridionen $HF_2^{\ominus}$ , unter Herstellung eines "lebenden" Polymers mit Wiederholungseinheiten eines oder mehrerer Monomeren.

**4.** Lebendes Polymer der Formel

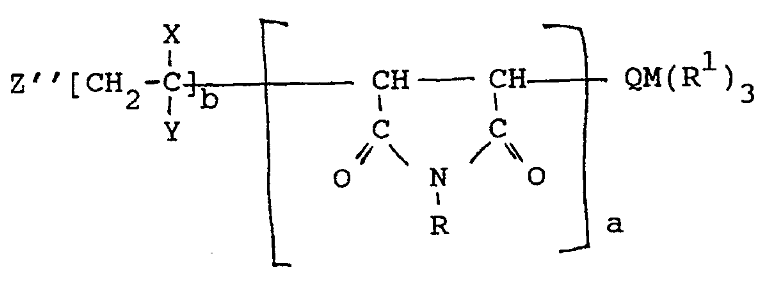

worin

Z" aus der aus

-CN, 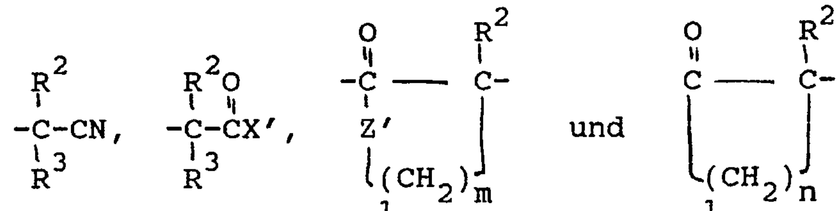 und ,

$-P(O)(NR'R'')_2$, $-P(O)(OR^1)_2$, $-P(O)[OSi(R^1)_3]_2$ und -SR

bestehenden Gruppe ausgewählt ist,
a und b jeweils unabhängig voneinander aus 0 oder einer Zahl im Bereich 1 bis etwa 100 000 ausgewählt sind, vorausgesetzt jedoch, daß (a + b) wenigstens 3 ist,
Q der aus der aus

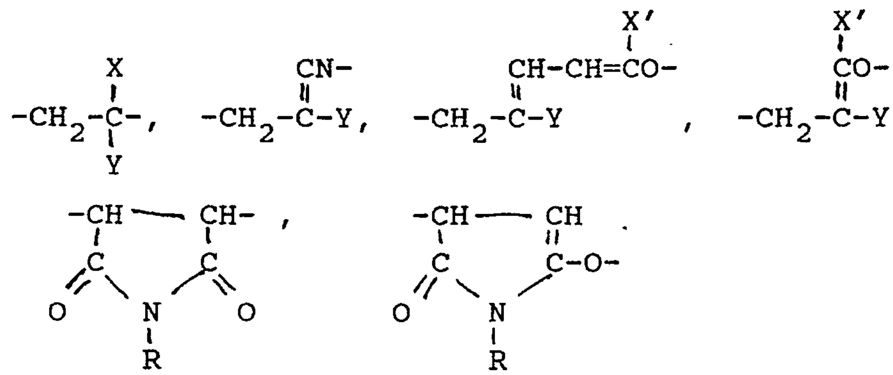

und deren Gemischen bestehenden Gruppe ausgewählte zweiwertige Rest ist;
X -CN, -CH = CHC(O)X' oder -C(O)X' ist;
Y -H, $-CH_3$, -CN oder $-CO_2R$ ist, vorausgesetzt jedoch, daß wenn X -CH = CHC(O)X' ist, Y -H oder $-CH_3$ ist;
X' $-OSi(R^1)_3$, -R, -OR oder -NR'R" ist;
$R^1$ jeweils unabhängig voneinander H oder ein Kohlenwasserstoff-Rest ist, welcher ein aliphatischer, alicyclischer, aromatischer oder gemischt-aliphatisch-aromatischer Rest ist, welcher bis zu 20 Kohlenstoff-Atome enthält, vorausgesetzt, daß wenigstens eine $R^1$-Gruppe nicht H ist;
R ein Kohlenwasserstoff-Rest ist, welcher ein aliphatischer, alicyclischer, aromatischer oder gemischt-aliphatisch-aromatischer Rest ist und bis zu 20 Kohlenstoff-Atome enthält, oder ein polymerer Rest, welcher wenigstens 20 Kohlenstoff-Atome enthält, wovon jeder dieser Reste gegebenenfalls einen oder mehrere Ether-Sauerstoff-Atome innerhalb seiner aliphatischen Abschnitte enthält und welcher gegebenenfalls einen oder mehrere funktionelle Substituenten enthält, welche unter Polymerisierungsbedingungen nicht reaktionsfähig sind, wobei wenigstens eine der R-Gruppen im Monomer gegebenenfalls einen oder mehrere reaktionsfähige Substituenten der Formel $-Z'(O)C-C(Y^1) = CH_2$ enthält, worin $Y^1$ H oder $CH_3$ ist und Z' O oder NR' ist; und
R' und R" jeweils unabhängig voneinander aus $C_{1-4}$ Alkyl ausgewählt sind; und
$R^2$ und $R^3$ jeweils unabhängig voneinander aus H und einem Kohlenwasserstoff-Rest von bis zu 20 Kohlenstoff-Atomen ausgewählt sind, welcher gegebenenfalls einen oder mehrere Ether-Sauerstoff-Atome innerhalb seiner aliphatischen Segmente enthält und welcher gegebenenfalls einen oder mehrere funktionelle Substituenten enthält, welche unter Polymerisierungsbedingungen nicht reaktionsfähig sind; und
m 2, 3 oder 4 ist;
n 3, 4 oder 5 ist; und
M Si, Sn oder Ge ist, oder
ein lebendes Polymer der Formel
(I) $R_p([Z^3\overline{P}\ QM(R^1)_2]_2(O))_p$; (II) $(R^1)_2M(Q\overline{P}\ Z")_2$; oder
(III) $O[M(R^1)_2Q\overline{P}\ Z"]_2$, worin

$R_p$ ein Kohlenwasserstoff-Rest ist, welcher aliphatisch, alicyclisch, aromatisch oder gemischt-aliphatisch-aromatisch ist und bis zu 20 Kohlenstoff-Atome enthält, oder ein wenigstens 20 Kohlenstoff-Atome enthaltender polymerer Rest mit der Wertigkeit p, welcher gegebenenfalls ein oder mehrere Ether-Sauerstoff-Atome, Ketogruppen und/oder funktionelle Substituenten, welche unter Polymerisierungsbedingungen nicht reaktionsfähig sind, enthält;

$Z^3$ ein aus der aus

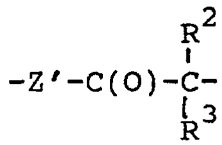 , 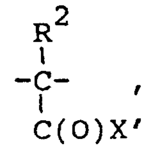 , 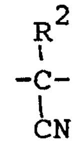 , 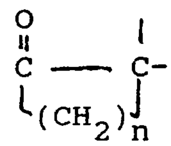 ,

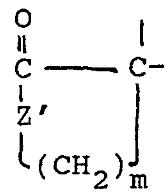

und deren Gemischen bestehenden Gruppe ausgewähltes Diradikal ist;

Z' O oder NR' ist, worin R' die im Vorstehenden angegebene Bedeutung hat;

$R^2$ und $R^3$ jeweils unabhängig voneinander aus H und einem wie voranstehend für R definierten Kohlenwasserstoff-Rest ausgewählt sind;

X' $-OSi(R^1)_3$, -R, -OR oder -NR'R" ist, worin

R, $R^1$, R' und R" die im Vorstehenden angegebene Bedeutung haben;

m 2, 3 oder 4 ist;

n 3, 4 oder 5 ist;

$\overline{P}$ ein zweiwertiger polymerer Rest der Formel

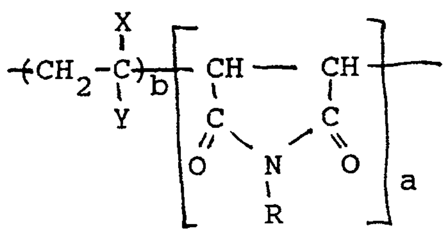

ist, worin

X, Y, R, a und b die im Vorstehenden angegebene Bedeutung haben;

Q, M und $R^1$ die im Vorstehenden angegebene Bedeutung haben; und

p eine gerade Zahl und wenigstens 1 ist, vorausgesetzt jedoch, daß,

(i) wenn $Z^3$

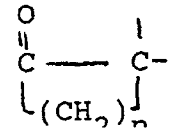

ist, M Sn oder Ge ist;

(ii) wenn $Z^3$

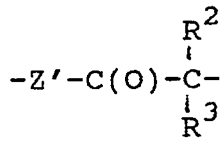

ist, $R^2$ und $R^3$ zusammengenommen

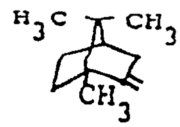

sind;
(iii) wenn $Z^3$

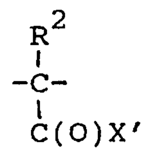

ist, $R^2$ und X' zusammengenommen

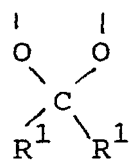

sind; und
(iv) in den Formeln (II) und (III) Z''

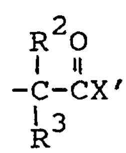

ist, worin $R^2$, $R^3$ und X' die im Vorstehenden angegebene Bedeutung haben.

**5.** Lösung des Polymers des Anspruchs 2 oder Anspruchs 4, gelöst oder dispergiert in einem aprotischen Lösungsmittel.

**6.** Film, hergestellt aus der Lösung des Anspruchs 5.

**7.** Faser, hergestellt aus der Lösung des Anspruchs 5.

**8.** Beschichtetes Substrat, hergestellt aus der Lösung des Anspruchs 5.

**9.** Polymer des Anspruchs 2 oder Anspruchs 4, in dem die "lebenden" Enden mit einer Endgruppe abgeschlossen sind, welche wenigsten einen funktionellen, unter den Abschließungsbedingungen nicht reaktionsfähigen Substituenten enthält.

**10.** Verwendung des "lebenden" Polymers des Anspruchs 2 oder Anspruchs 4 zur Herstellung eines Blockpolymers.

11. Blockpolymer umfassend ein "lebendes" Polymer des Anspruchs 2 oder Anspruchs 4, welches an ein anderes Polymer dieser Ansprüche gebunden ist.

12. Formteil, hergestellt aus dem Polymer des Anspruchs 2 oder Anspruchs 4.

13. Lichtempfindlicher Gegenstand, hergestellt aus dem Polymer des Anspruchs 2 oder Anspruchs 4.

14. Verfahren umfassend das Abbrechen des "lebenden" Polymers der aus

(I) 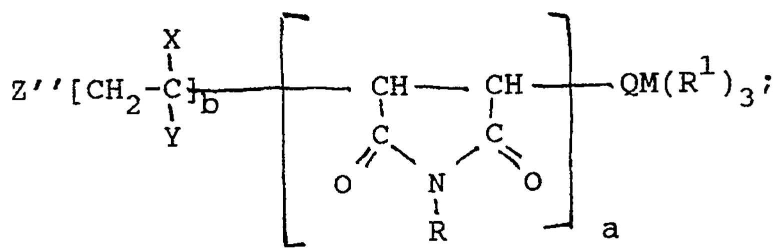

(II) $R_p([Z^3\bar{P}\ QM(R^1)_2]_2(O))_p$; (III) $(R^1)_2M(Q\bar{P}\ Z'')_2$ und (IV) $O[M(R^1)_2Q\bar{P}\ Z'']_2$; worin

Z" aus der aus

-CN, 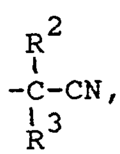, 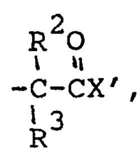, 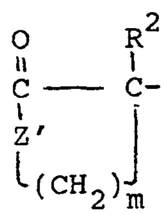 und 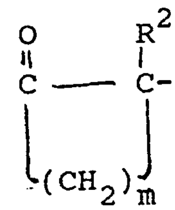 ,

$-P(O)(NR'R'')_2$, $-P(O)(OR^1)_2$, $-P(O)[OSi(R^1)_3]_2$ und -SR bestehenden Gruppe ausgewählt ist;
a und b jeweils unabhängig voneinander aus 0 oder einer Zahl im Bereich 1 bis etwa 100 000 ausgewählt sind, vorausgesetzt jedoch, daß (a + b) wenigstens 3 ist;
Q der aus der aus

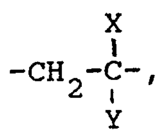, 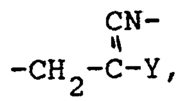, 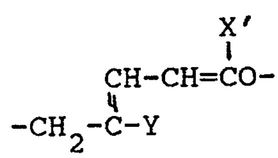 , 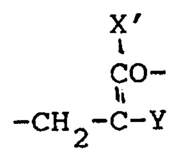

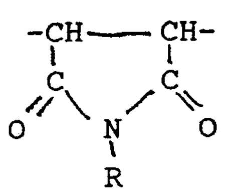 , 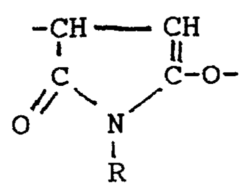

und deren Gemischen bestehenden Gruppe ausgewählte zweiwertige Rest ist;
X -CN, -CH = CHC(O)X' oder -C(O)X' ist;
Y -H, $-CH_3$, -CN oder $-CO_2R$ ist, vorausgesetzt jedoch, daß, wenn X -CH = CHC(O)X' ist, Y -H oder $-CH_3$ ist;
X' $-OSi(R^1)_3$, -R, -OR oder -NR'R" ist;
$R^1$ jeweils unabhängig voneinander ein Kohlenwasserstoff-Rest mit bis zu 20 Kohlenstoff-Atomen oder H ist, vorausgesetzt, daß wenigstens eine $R^1$-Gruppe nicht H ist;
R ein Kohlenwasserstoff-Rest mit bis zu 20 Kohlenstoff-Atomen ist, welcher gegebenenfalls einen oder mehrere Ether-Sauerstoff-Atome innerhalb seiner aliphatischen Segmente enthält und welcher gegebenenfalls einen oder mehrere funktionelle Substituenten enthält, welche unter Polymerisierungsbedingungen nicht reaktionsfähig sind;

R' und R" jeweils unabhängig voneinander aus $C_{1-4}$ Alkyl ausgewählt sind;
$R^2$ und $R^3$ jeweils unabhängig voneinander aus H und einem Kohlenwasserstoff-Rest von bis zu 20 Kohlenstoff-Atomen ausgewählt sind, welcher gegebenenfalls einen oder mehrere Ether-Sauerstoff-Atome innerhalb seiner aliphatischen Segmente enthält und welcher gegebenenfalls einen oder mehrere funktionelle Substituenten enthält, welche unter Polymerisierungsbedingungen nicht reaktionsfähig sind; und
Z' O oder NR' ist, worin R' die im Vorstehenden angegebene Bedeutung hat;
m 2, 3 oder 4 ist;
n 3, 4 oder 5 ist,
M Si, Sn oder Ge ist;
$R_p$ ein Kohlenwasserstoff-Rest ist, welcher aliphatisch, alicyclisch, aromatisch oder aliphaisch-aromatisch ist und bis zu 20 Kohlenstoff-Atome enthält, oder ein wenigstens 20 Kohlenstoff-Atome enthaltender polymerer Rest mit der Wertigkeit p, welcher gegebenenfalls ein oder mehrere Ether-Sauerstoff-Atome, Ketogruppen und/oder funktionelle Substituenten, welche unter Polymerisierungsbedingungen nicht reaktionsfähig sind, enthält,
$Z^3$ ein aus der aus

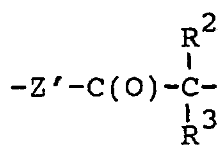 , 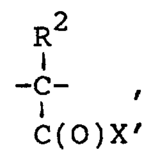 , 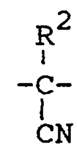 , 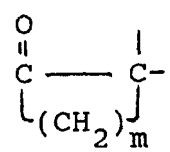 ,

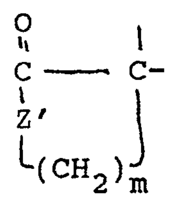

und deren Gemischen bestehenden Gruppe ausgewähltes Diradikal ist;
$\overline{P}$ ein zweiwertiger polymerer Rest der Formel

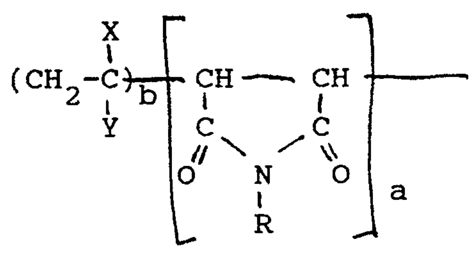

ist, und
p eine ganze Zahl und wenigstens 1 ist, vorausgesetzt jedoch, daß,
(i) wenn $Z^3$

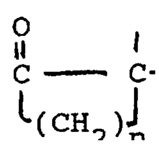

ist, M Sn oder Ge ist;
(ii) wenn $Z^3$

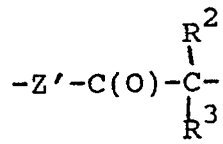

ist, $R^2$ und $R^3$ zusammengenommen

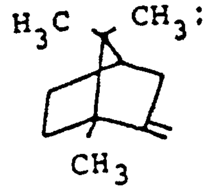

sind;
(iii) wenn $Z^3$

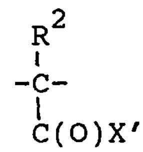

ist, $R^2$ und X' zusammengenommen

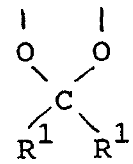

sind;
(iv) wenn in Formel (I) Z" eine der vorstehend aufgeführten ersten fünf Gruppen ist, wenigstens eine aber nicht mehr als zwei $R^1$-Gruppen in Z" H sind, und
(v) in den Formeln (III) und (IV) Z"

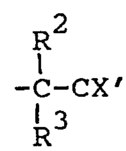

ist,
ausgewählten Formel mit einer Quelle aktiven Wasserstoffs.

**15.** Verfahren umfassend das Abschließen des "lebenden" Polymers des Anspruchs 4 mit einer Quelle aktiven Wasserstoffs.

**16.** Beschichtungszusammensetzung umfassend das Produkt des Verfahrens des Anspruchs 14, bei dem ein "lebendes" Polymer der Formel II, III oder IV als Ausgangsmaterial verwendet wird.

**17.** Beschichtungszusammensetzung umfassend das Produkt des Verfahrens des Anspruchs 15.

**18.** Lackzusammensetzung umfassend das Quervernetzungsvermögen und die Beschichtungszusammensetzung des Anspruchs 16 oder Anspruchs 17.

**19.** Lackzusammensetzung des Anspruchs 18, bei der das Quervernetzungsvermögen durch ein Melamin-

Harz geschaffen wird.

**20.** Lackzusammensetzung des Anspruchs 18, bei der das Quervernetzungsvermögen durch ein Isocyanat-Harz geschaffen wird.

**21.** Beschichtungszusammensetzung des Anspruchs 16 oder Anspruchs 17, welche ein durch Lösungsmittelverdunstung härtbarer Lack ist.

**22.** Substrat beschichtet mit der Beschichtungszusammensetzung eines der Ansprüche 16 bis 21.

**23.** Substrat beschichtet mit einer Vielzahl von Schichten der Lackbeschichtung eines der Ansprüche 18 bis 20, wobei die Zusammensetzung wenigstens einer Schicht ein Pigment enthält und die Zusammensetzung wenigstens der äußersten Schicht pigmentfrei ist.

**24.** Beschichtungszusammensetzung des Anspruchs 16 oder Anspruchs 17 in Form eines Pulvers.

**25.** Beschichtungszusammensetzung des Anspruchs 16 oder Anspruchs 17, suspendiert und/oder gelöst in einem wäßrigen Medium.

**26.** Beschichtungszusammensetzung des Anspruchs 16 oder Anspruchs 17, suspendiert und/oder gelöst in einem organischen flüssigen Medium.

**27.** Elektrobeschichtungszusammensetzung gemäß Anspruch 16 oder Anspruch 17.

**28.** Beschichtungszusammensetzung gemäß Anspruch 16 oder Anspruch 17, welche durch ein Material in Dampfform gehärtet werden kann.